# EUROPEAN PATENT APPLICATION

(11) **EP 4 826 605 A1**
(43) Date of publication of application: **21.10.2026**
(21) Application number: 24906489.0
(22) Date of filing: 20.12.2024
(51) Int. Cl.: G06N 20/00

(54) **DISTRIBUTED TRAINING METHOD AND APPARATUS**

(30) Priority: 21.12.2023 CN 202311777211
(71) Applicant: Huawei Technologies Co., Ltd., Shenzhen, Guangdong 518129 (CN)
(72) Inventor: ZHANG, Zhengming, Shenzhen, Guangdong 518129 (CN); TIAN, Yang, Shenzhen, Guangdong 518129 (CN); SUN, Yan, Shenzhen, Guangdong 518129 (CN)
(74) Representative: Huawei European IPR
(86) International application number: PCT/CN2024/140796
(87) International publication number: WO 2025/131014

(57) **Abstract**

A distributed training method for an artificial intelligence AI model and an apparatus are provided. A subnode that participates in training of a model of a central node feeds back a representation difference between models to the central node, and the central node issues model training indication based on the representation difference, so that a high-performance machine learning model can be obtained within a limited quantity of communication processes between the subnode and the central node, to improve performance of distributed training.

## Description

This application claims priority to Chinese Patent Application No. 202311777211.1, filed with the China National Intellectual Property Administration on December 21, 2023, and entitled "DISTRIBUTED TRAINING METHOD AND APPARATUS", which is incorporated herein by reference in its entirety.

### TECHNICAL FIELD

This application relates to the field of communication technologies, and in particular, to a distributed training method and an apparatus.

### BACKGROUND

Distributed training means that a machine learning training process is distributed across a plurality of compute subnodes (subnodes for short), and distributed training allows a central node to collect machine learning models trained by the plurality of subnodes, to improve the overall machine learning training effect.

Distributed training aims to obtain a high-performance machine learning model within a limited quantity of communication processes between the subnodes and the central node. However, because the central node cannot access user data, when data of the subnodes is not independently and identically distributed, performance of the model cannot be ensured. In addition, when the subnodes feed back gradients via unstable wireless transmission, a quantity of gradients of the subnodes successfully received by the central node is subject to randomness, causing fluctuations in model parameter updates of the central node.

In view of this, how to improve performance of distributed training is an urgent problem to be resolved.

### SUMMARY

This application provides a distributed training method and an apparatus, to improve performance of distributed training.

According to a first aspect, a distributed training method is provided. The method includes: receiving first information from a first subnode, where the first information indicates a first representation difference between a model of a central node and a model of the first subnode, and the first subnode is any one of a plurality of subnodes that participate in training of the model of the central node; and sending second information to the first subnode, where the second information is obtained based on the first representation difference, and the second information includes training indication information of the model of the first subnode.

In this aspect, the central node receives a representation difference between models fed back by a subnode that participates in training of the model of the central node, and the central node issues model training indication based on the representation difference, so that a high-performance machine learning model can be obtained within a limited quantity of communication processes between the subnodes and the central node, to improve performance of distributed training.

With reference to the first aspect, in a possible implementation, the method further includes: broadcasting third information, where the third information includes at least one of the following: model configuration information and a common dataset, and the model configuration information indicates at least one of the following: types of models of the plurality of subnodes, structure information of the models of the plurality of subnodes, model parameters of the models of the plurality of subnodes, or training configuration information of the models of the plurality of subnodes.

In this implementation, the third information is used for training of the model of the first subnode.

The subnodes compute the first representation differences based on the same common dataset, so that a representation difference between a model of each subnode and the model of the central node, or a representation difference between the models of the subnodes can be more accurately obtained by comparison.

According to a second aspect, a distributed training method is provided. The method includes: sending first information to a central node, where the first information indicates a first representation difference between a model of the central node and a model of a first subnode, and the first subnode is any one of a plurality of subnodes that participate in training of the model of the central node; and receiving second information from the central node, where the second information is obtained based on the first representation difference, and the second information includes training indication information of the model of the first subnode.

In this aspect, a subnode that participates in training of the model of the central node feeds back a representation difference between models to the central node, and the central node issues model training indication based on the representation difference, so that a high-performance machine learning model can be obtained within a limited quantity of communication processes between the subnode and the central node, to improve performance of distributed training.

With reference to the second aspect, in a possible implementation, the method further includes: updating the model of the first subnode based on the second information.

With reference to the second aspect, in another possible implementation, the method further includes: receiving third information, where the third information includes at least one of the following: model configuration information and a common dataset, and the model configuration information indicates at least one of the following: types of models of the plurality of subnodes, structure information of the models of the plurality of subnodes, model parameters of the models of the plurality of subnodes, or training configuration information of the models of the plurality of subnodes.

In this implementation, the third information is used for training of the model of the first subnode.

The subnodes compute the first representation differences based on the same common dataset, so that a representation difference between a model of each subnode and the model of the central node, or a representation difference between the models of the subnodes can be more accurately obtained by comparison.

With reference to any one of the first aspect, the second aspect, or the implementations of the first aspect and the second aspect, in still another possible implementation, the first representation difference satisfies a first condition, and the training indication information indicates the first subnode to continue training the model of the first subnode. Optionally, that the first representation difference satisfies the first condition includes: The first representation difference is less than or equal to a first threshold. Optionally, the first condition, for example, the first threshold, is determined by the central node in advance, or is predefined in a protocol.

With reference to any one of the first aspect, the second aspect, or the implementations of the first aspect and the second aspect, in still another possible implementation, the first representation difference satisfies a second condition, and the training indication information indicates the first subnode to stop training the model of the first subnode. Optionally, that the first representation difference satisfies the second condition includes: The first representation difference is greater than or equal to a second threshold. Optionally, the second threshold is the same as or different from the first threshold. Optionally, the second condition, for example, the second threshold, is determined by the central node in advance, or is predefined in a protocol.

With reference to any one of the first aspect, the second aspect, or the implementations of the first aspect and the second aspect, in still another possible implementation, the training indication information further indicates a representation difference coefficient in a loss function of the model of the first subnode.

In this implementation, the central node may further allocate, based on a difference value analysis result, a parameter of a corresponding loss function to a subnode with a large difference value, for example, a representation difference coefficient.

With reference to any one of the first aspect, the second aspect, or the implementations of the first aspect and the second aspect, in still another possible implementation, the second information further includes a representation difference coefficient in a loss function of the model of the first subnode.

With reference to any one of the first aspect, the second aspect, or the implementations of the first aspect and the second aspect, in still another possible implementation, a larger first representation difference indicates a larger representation difference coefficient.

In this implementation, a larger first representation difference indicates a larger representation difference coefficient. A larger first representation difference indicates that a model trained by the subnode deviates farther from the model of the central node, or a model trained by the subnode in all the subnodes that participate in training of the model of the central node deviates farther from a model trained by another subnode. Therefore, the central node allocates a representation difference coefficient, so that the subnode can update a loss function of the subnode based on the representation difference coefficient, and subsequent update of the model of the subnode has less impact on a training result.

With reference to any one of the first aspect, the second aspect, or the implementations of the first aspect and the second aspect, in still another possible implementation, the first representation difference is obtained based on a local dataset of the first subnode or a common dataset.

In this implementation, the subnodes compute first representation differences based on the same local dataset or common dataset, so that a representation difference between a model of each subnode and the model of the central node, or a representation difference between the models of the subnodes can be more accurately obtained by comparison.

With reference to any one of the first aspect, the second aspect, or the implementations of the first aspect and the second aspect, in still another possible implementation, the first representation difference is a difference between an output or an intermediate value of the model of the central node and an output or an intermediate value of the model of the first subnode, and/or the first representation difference is a difference between outputs or intermediate values of the models of the plurality of subnodes, where the output or the intermediate value is obtained based on a same input.

In this implementation, a difference between outputs or intermediate values of models is obtained based on a same input, and is used as a representation difference of the models, so that the difference between the models can be accurately represented.

The method in the first aspect may be performed by the central node, or may be performed by a module (for example, a processor, a chip, or a chip system) used in the central node, or may be implemented by a logical node, a logical module, or software that can implement all or a part of functions of the central node.

The method in the second aspect may be performed by a subnode, or may be performed by a module (for example, a processor, a chip, or a chip system) used in the subnode, or may be implemented by a logical node, a logical module, or software that can implement all or a part of functions of the subnode.

According to a third aspect, a distributed training method is provided. The method includes: sending first information, where the first information includes at least one of the following: model configuration information, a common dataset, an update rule of a threshold, and an update rule of a representation difference coefficient, the threshold is used for comparison of a representation difference between a model of a central node and a model of a first subnode, and the representation difference coefficient is a parameter in a loss function of the model of the first subnode; and receiving second information, where the second information includes model information obtained through training by the first subnode.

In this aspect, the central node delivers the model configuration information, the common dataset, the update rule of the threshold, and the update rule of the representation difference coefficient to a subnode. The subnode may compute a representation difference between the model of the central node and a model of the subnode, compare the representation difference with the threshold, and determine whether to continue or stop training the model. If training of the model continues, a loss function with a representation difference coefficient is used to update a model parameter. A representation difference between models is constrained, so that dispersion of update directions of the subnodes can be effectively reduced, to reduce impact of non-independently and identically distributed data on performance of a distributed training system and a deviation caused by a packet loss, improve final performance of the model of the central node, and improve performance of distributed training.

With reference to the third aspect, in a possible implementation, the method further includes: updating the model of the central node based on the second information.

According to a fourth aspect, a distributed training method is provided. The method includes: computing a first representation difference between a model of a central node and a model of a first subnode based on a local dataset of the first subnode or a common dataset; when the first representation difference is less than or equal to a first threshold, continuing training the model of the first subnode; and updating the model of the first subnode by using the local dataset and a loss function with a representation difference coefficient, where a larger first representation difference indicates a larger representation difference coefficient.

In this aspect, a subnode may compute a representation difference between the model of the central node and a model of the subnode, compare the representation difference with a threshold, and determine whether to continue or stop training the model. If training of the model continues, a loss function with a representation difference coefficient is used to update a model parameter. A representation difference between models is constrained, so that dispersion of update directions of subnodes can be effectively reduced, to reduce impact of non-independently and identically distributed data on performance of a distributed training system and a deviation caused by a packet loss, improve final performance of the model of the central node, and improve performance of distributed training.

With reference to the fourth aspect, in a possible implementation, the method further includes: receiving first information, where the first information includes at least one of the following: model configuration information, the common dataset, an update rule of a threshold, and an update rule of the representation difference coefficient.

In this implementation, the update rule of the threshold may be formulated by the central node in advance. For example, the update rule is formulated as follows: The threshold decreases with an increase in a quantity of communication rounds between the first subnode and the central node, and the threshold of the first subnode remains unchanged before the first subnode communicates with the central node. Each transmission of a new model from the central node to the first subnode is one communication. It may be understood that, as the subnodes continue training and the central node aggregates models of the subnodes, models of the central node and the subnodes gradually converge. Therefore, as a quantity of communication rounds between the first subnode and the central node increases, the representation difference between the model of the central node and the model of the first subnode gradually decreases. Therefore, the update rule of the threshold may be formulated as follows: The threshold decreases with an increase in the quantity of communication rounds between the first subnode and the central node.

The update rule of the representation difference coefficient indicates a subnode to obtain, after obtaining a representation difference by computation, an updated representation difference coefficient based on an initial representation difference coefficient and the representation difference obtained by computation. The update rule of the representation difference coefficient is formulated by the central node in advance. For example, the update rule of the representation difference coefficient is: linear or non-linear scaling of a representation difference coefficient from a previous update is used as an update amount of a representation difference coefficient relative to the previous representation difference coefficient. It may be understood that a larger representation difference indicates a larger representation difference coefficient. A larger representation difference indicates that a model trained by the subnode deviates farther from the model of the central node, or a model trained by the subnode in all subnodes that participate in training of the model of the central node deviates farther from a model trained by another subnode. Therefore, the subnode obtains an updated representation difference coefficient, so that the subnode can update a loss function of the subnode based on the representation difference coefficient, and subsequent update of the model of the subnode has less impact on a training result.

With reference to the fourth aspect, in another possible implementation, the method further includes: updating the first threshold based on the update rule of the threshold, to obtain a second threshold.

With reference to the fourth aspect, in still another possible implementation, the method further includes: updating the representation difference coefficient based on the update rule of the representation difference coefficient.

With reference to the fourth aspect, in still another possible implementation, the method further includes: when the first representation difference is greater than the first threshold, stopping training the model of the first subnode.

With reference to the third aspect or the fourth aspect, in still another possible implementation, the model configuration information indicates at least one of the following: types of models of a plurality of subnodes that participate in training of the model of the central node, structure information of the models of the plurality of subnodes, model parameters of the models of the plurality of subnodes, or training configuration information of the models of the plurality of subnodes.

In still another possible implementation, the update rule of the threshold is that the threshold decreases with an increase in a quantity of communication rounds between the first subnode and the central node.

In still another possible implementation, the update rule of the representation difference coefficient is: linear or non-linear scaling of a representation difference coefficient from a previous update is used as an update amount of a representation difference coefficient relative to the previous representation difference coefficient.

In still another possible implementation, a larger representation difference indicates a larger representation difference coefficient.

According to a fifth aspect, a distributed training apparatus is provided, and is configured to implement the distributed training method in any one of the first aspect, the third aspect, or the implementations of the first aspect and the third aspect. The apparatus may be a central node, or may be a module (for example, a processor, a chip, or a chip system) used in the central node, or may be a logical node, a logical module, or software that can implement all or a part of functions of the central node. In an implementation, the distributed training apparatus may include a sending unit and a receiving unit, and may further include a processing unit. The sending unit and the receiving unit may be independent of each other, or may be combined together (which may be referred to as a "transceiver unit").

According to a sixth aspect, a distributed training apparatus is provided, and is configured to implement the distributed training method in any one of the second aspect, the fourth aspect, or the implementations of the second aspect and the fourth aspect. The apparatus may be a subnode, or may be a module (for example, a processor, a chip, or a chip system) used in the subnode, or may be a logical node, a logical module, or software that can implement all or a part of functions of the subnode. In an implementation, the distributed training apparatus may include a sending unit and a receiving unit, and may further include a processing unit. The sending unit and the receiving unit may be independent of each other, or may be combined together (which may be referred to as a "transceiver unit").

In a possible implementation, the distributed training apparatus according to the fifth aspect and the sixth aspect includes a module configured to perform the method according to any one of the first aspect and the second aspect or any one of the implementations.

In another possible implementation, the distributed training apparatus in the fifth aspect and the sixth aspect includes a processing circuit coupled to a memory, and the processing circuit is configured to implement a corresponding function in the foregoing distributed training method performed by the apparatus. The memory is configured to be coupled to the processing circuit, and stores a program (instructions) and/or data necessary for the apparatus. Optionally, the distributed training apparatus may further include a communication interface configured to implement communication between the apparatus and another network element. Optionally, the memory may be located inside the distributed training apparatus, or may be located outside the distributed training apparatus. For example, the processing circuit may be a processor or a circuit used for processing in the processor.

When the distributed training apparatus in the fifth aspect and the sixth aspect is a chip, the sending unit may be an output unit, for example, an output circuit or a communication interface, and the receiving unit may be an input unit, for example, an input circuit or a communication interface. When the distributed training apparatus is a terminal, the sending unit may be a transmitter or a transmitter machine; and the receiving unit may be a receiver or a receiver machine.

According to a seventh aspect, a computer-readable storage medium is provided. The computer-readable storage medium stores a computer program or instructions. When the computer program or the instructions are executed, the methods in the foregoing aspects are implemented.

According to an eighth aspect, a computer program product including instructions is provided. When the instructions are run on a distributed training apparatus, the distributed training apparatus is enabled to perform the methods in the foregoing aspects.

According to a ninth aspect, a distributed training system is provided. The distributed training system includes the distributed training apparatus according to the fifth aspect and the distributed training apparatus according to the sixth aspect.

### BRIEF DESCRIPTION OF DRAWINGS

FIG. 1 is a diagram of an architecture of a distributed training system according to an embodiment of this application;
FIG. 2 is a simplified diagram of a wireless communication system according to an embodiment of this application;
FIG. 3 is a diagram of an architecture of another distributed training system according to this application;
FIG. 4A(a) to FIG. 4D are diagrams of network architectures according to an embodiment of this application;
FIG. 5 is a diagram of a neuron structure;
FIG. 6 is a diagram of a neural network;
FIG. 7 is a diagram of an AI application framework;
FIG. 8 is a diagram of an architecture of another communication system according to an embodiment of this application;
FIG. 9 is a schematic flowchart of a distributed training method according to an embodiment of this application;
FIG. 10A and FIG. 10B are a schematic flowchart of another distributed training method according to an embodiment of this application;
FIG. 11 is a diagram of an example of computation of a representation difference according to an embodiment of this application;
FIG. 12 is a block diagram of an example of a distributed training system according to an embodiment of this application;
FIG. 13A and FIG. 13B are a schematic flowchart of still another distributed training method according to an embodiment of this application;
FIG. 14 is a diagram of a structure of a distributed training apparatus according to an embodiment of this application; and
FIG. 15 is a diagram of a structure of another distributed training apparatus according to an embodiment of this application.

### DESCRIPTION OF EMBODIMENTS

The following describes embodiments of this application with reference to the accompanying drawings in embodiments of this application.

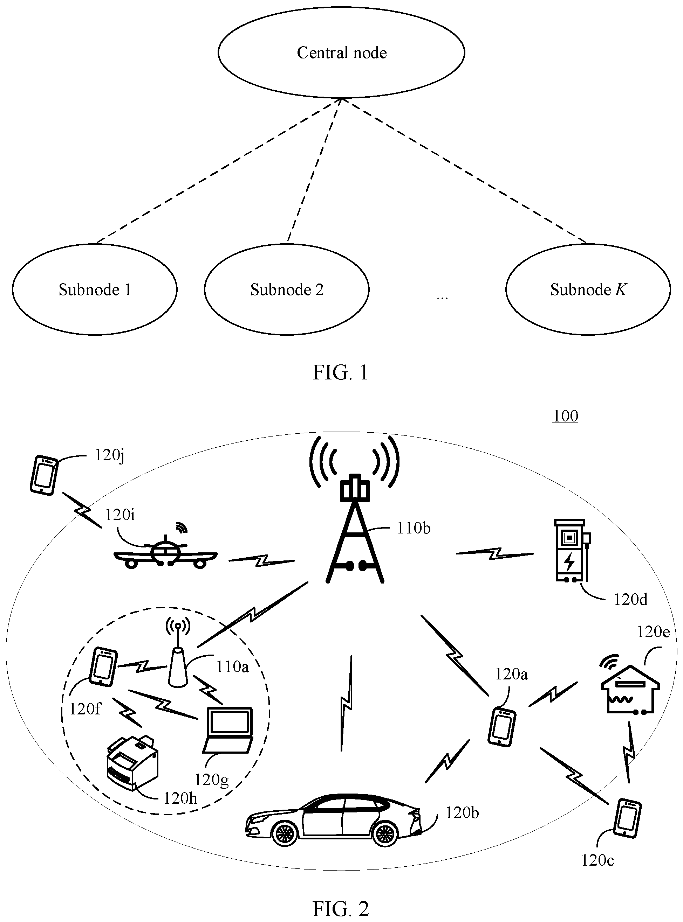

Embodiments of this application may be applied to a distributed training system shown in FIG. 1. The distributed training system includes a central node and K subnodes, where *K* is a positive integer. For example, the distributed training system may be a federated learning system or a Gossip learning system. Data, model information, and the like may be transmitted between the central node and each subnode.

A machine learning model trained by the distributed training system may be oriented to a non-wireless communication service, for example, image recognition and natural language processing, or may be oriented to a wireless communication service, for example, beam selection based on environment information.

A technology provided in this application may be applied to various communication systems. For example, the communication system may be a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) system, a wireless local area network (wireless local area network, WLAN) system, a satellite communication system, a converged system of a plurality of systems, or a future communication system, for example, a 6th generation (6th generation, 6G) communication system. The 5G communication system may also be referred to as a new radio (new radio, NR) system.

A network element in a communication system may send a signal to another network element or receive a signal from another network element. The signal may include information, signaling, data, and the like. The network element may alternatively be replaced with an entity, a network entity, a device, a terminal device, a communication module, a node, a communication node, or the like. In this application, the network element is used as an example for description. For example, the communication system may include at least one terminal device and at least one network device. The network device may send a downlink signal to the terminal device, and/or the terminal device may send an uplink signal to the network device. In addition, it may be understood that, if the communication system includes a plurality of terminal devices, the plurality of terminal devices may also send signals to each other. That is, both a signal sending network element and a signal receiving network element may be terminal devices.

FIG. 2 is a simplified diagram of a wireless communication system according to an embodiment of this application. As shown in FIG. 2, the wireless communication system includes a radio access network 100. The radio access network 100 may be a next generation (for example, 6G or higher-version) radio access network, or a conventional (for example, 5G or 4G) radio access network. One or more terminal devices (120a to 120j, which are collectively referred to as 120) may be interconnected or connected to one or more network devices (110a and 110b, which are collectively referred to as 110) in the radio access network 100. Optionally, FIG. 2 is merely a diagram. The wireless communication system may further include another device, for example, may further include a core network device, a wireless relay device, and/or a wireless backhaul device, which are not shown in FIG. 2.

Optionally, during actual application, the wireless communication system may include a plurality of network devices (also referred to as access network devices), or may include a plurality of terminal devices. One network device may serve one or more terminal devices simultaneously. One terminal device may also access one or more network devices simultaneously. A quantity of terminal devices and a quantity of network devices that are included in the wireless communication system are not limited in embodiments of this application.

The network device may be an entity that is configured to transmit or receive a signal on a network side. The network device may be an access device via which the terminal device accesses the wireless communication system in a wireless manner. For example, the network device may be a base station. The base station may cover various names in a broad sense, or may be replaced with the following names, for example, a radio access network (radio access network, RAN) node, a NodeB (NodeB), an evolved NodeB (evolved NodeB, eNB), a next generation NodeB (next generation NodeB, gNB), a network device in an open radio access network (open radio access network, O-RAN), a relay station, an access point, a transmitting and receiving point (transmitting and receiving point, TRP), a transmitting point (transmitting point, TP), a master node (master eNB, MeNB), a secondary node (secondary eNB, SeNB), a multi-standard radio (multi-standard radio, MSR) node, a home base station, a network controller, an access node, a radio node, an access point (access point, AP), a transmitting node, a transceiver node, a baseband unit (building baseband unit, BBU), a radio remote unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a central unit control plane (CU control plane, CU-CP) node, a central unit user plane (CU user plane, CU-UP) node, a positioning node, and a RAN intelligent controller (RAN intelligent controller, RIC). The base station may be a macro base station, a micro base station, a relay node, a donor node, an analogue, or a combination thereof. Alternatively, the network device may be a communication module, a modem, or a chip disposed in the foregoing device or apparatus. Alternatively, the network device may be a mobile switching center, a device that takes on a function of the base station in device-to-device (device-to-device, D2D), vehicle-to-everything (vehicle-to-everything, V2X), and machine-to-machine (machine-to-machine, M2M) communication, a network side device in a 6G network, a device that takes on a function of the base station in a future communication system, or the like. The network device may support networks using a same access technology or different access technologies. A specific technology and a specific device form used by the network device are not limited in embodiments of this application.

The network device may be fixed or mobile. For example, base stations 110a and 110b are stationary, and are responsible for wireless transmission and reception in one or more cells from the terminal device 120. A helicopter or uncrewed aerial vehicle 120i shown in FIG. 2 may be configured to serve as a mobile base station, and one or more cells may move based on a location of the mobile base station 120i. In another example, the helicopter or the uncrewed aerial vehicle (120i) may be configured to serve as a terminal device communicating with the base station 110b.

In this application, a communication apparatus configured to implement functions of the foregoing access network may be a network device, may be a network device having some functions of the access network, or may be an apparatus that can support implementation of the functions of the access network, for example, a chip system, a hardware circuit, a software module, or a combination of a hardware circuit and a software module. The apparatus may be installed in the network device or used together with the network device. In the method in this application, an example in which the communication apparatus configured to implement the functions of the network device is the network device is used for description.

The terminal device may be an entity, for example, a mobile phone, that is configured to receive or transmit a signal on a user side. The terminal device may be configured to connect to a person, an object, and a machine. The terminal device may communicate with one or more core networks via the network device. The terminal device includes a handheld device with a wireless connection function, another processing device connected to a wireless modem, a vehicle-mounted device, or the like. The terminal device may be a portable, pocket-sized, handheld, computer built-in, or vehicle-mounted mobile apparatus. The terminal device 120 may be widely used in various scenarios, such as cellular communication, D2D, V2X, point-to-point (point-to-point, P2P), machine-to-machine (machine-to-machine, M2M), machine-type communication (machine-type communication, MTC), the internet of things (internet of things, IoT), virtual reality (virtual reality, VR), augmented reality (augmented reality, AR), industrial control, autonomous driving, telemedicine, a smart grid, smart furniture, a smart office, a smart wearable, smart transportation, a smart city, an unmanned aircraft, a robot, remote sensing, passive sensing, positioning, navigation and tracking, and autonomous delivery and mobility. Some examples of the terminal device 120 are 3GPP standard user equipment (user equipment, UE), a fixed device, a mobile device, a handheld device, a wearable device, a cellular phone, a smartphone, a session initiated protocol (session initiated protocol, SIP) phone, a notebook computer, a personal computer, a smart book, a vehicle, a satellite, a global positioning system (global positioning system, GPS) device, a target tracking device, an unmanned aircraft, a helicopter, a flight, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device such as a smartwatch, a VR device, an AR device, a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal such as a smart fuel dispenser in a smart city (smart city), a terminal device on a high-speed rail, and a wireless terminal such as a smart speaker, a smart coffee machine, or a smart printer in a smart home (smart home). The terminal device 120 may be a wireless device in the foregoing scenarios or an apparatus configured to be disposed in the wireless device, for example, a communication module, a modem, or a chip in the foregoing device. The terminal device may also be referred to as a terminal, a terminal device, UE, a mobile station (mobile station, MS), a mobile terminal (mobile terminal, MT), or the like. Alternatively, the terminal device may be a terminal device in a future wireless communication system. The terminal device may be used in a dedicated network device, a general-purpose device, or the like. A specific technology and a specific device form used by the terminal device are not limited in embodiments of this application.

Optionally, the terminal device may serve as a base station. For example, the UE may serve as a scheduling entity that provides sidelink signals between UE in V2X, D2D, P2P, or the like. As shown in FIG. 2, a cellular phone 120a and a vehicle 120b communicate with each other by using sidelink signals. The cellular phone 120a communicates with a smart home device 120e without relaying a communication signal via the base station 110b.

In this application, a communication apparatus configured to implement functions of the terminal device may be a terminal device, a terminal device having a part of functions of the terminal device, or an apparatus that can support implementation of the functions of the terminal device, for example, a chip system. The apparatus may be mounted in the terminal device or used in cooperation with the terminal device. In this application, the chip system may include a chip, or may include a chip and another discrete component. In the technical solutions provided in this application, an example in which the communication apparatus is a terminal device or UE is used for description.

Optionally, the wireless communication system usually includes a cell, the base station provides cell management, and the base station provides a communication service for a plurality of mobile stations (mobile stations, MSs) in the cell. The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack. Optionally, one cell may correspond to one carrier or component carrier.

In some deployments, the network device in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist a terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, some downlink and/or uplink baseband functions are moved from the DU to the RU for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix removal are moved from the DU to the RU for implementation. In a possible implementation, the interface may be an enhanced common public radio interface (enhanced common public radio interface, eCPRI). In an eCPRI architecture, split manners between the DU and RU are different, which correspond to different categories (categories, Cats) of eCPRIs, such as eCPRI Cats A, B, C, D, E, and F.

The eCPRI Cat A is used as an example. For downlink transmission, splitting is performed at layer mapping. The DU is configured to implement the layer mapping and one or more functions (that is, one or more of encoding, rate matching, scrambling, modulation, or the layer mapping) before the layer mapping, and other functions (for example, one or more of resource element (resource element, RE) mapping, digital beamforming (beamforming, BF), or inverse fast Fourier transform (inverse fast Fourier transform, IFFT)/cyclic prefix (cyclic prefix, CP) addition) after the layer mapping are moved to the RU for implementation. For uplink transmission, splitting is performed at RE demapping. The DU is configured to implement the demapping and one or more functions before the demapping (that is, one or more of the following functions: decoding, de-rate matching, descrambling, demodulation, inverse discrete Fourier transform (inverse discrete Fourier transform, IDFT), channel equalization, or the RE demapping), and another function after the demapping (for example, one or more of digital BF or FFT/CP removal) is moved to the RU for implementation. It may be understood that, for function descriptions of DUs and RUs corresponding to various categories of eCPRIs, refer to the eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device, or may be an apparatus that can support a network device in implementing the function, for example, a chip system, a hardware circuit, a software module, or a combination of a hardware circuit and a software module. The apparatus may be mounted in the network device or used in combination with the network device. In embodiments of this application, only an example in which the apparatus configured to implement the function of the network device is a network device is used for description, and constitutes no limitation on the solutions in embodiments of this application.

It may be understood that this application may be applied between a network device and a terminal device.

Protocol layer structure between the network device and the terminal device:
Communication between the network device and the terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the network device and the terminal device may further include an artificial intelligence (artificial intelligence, AI) layer for transmission of data related to an AI function.

Data transmission between the network device and the terminal device is used as an example. Data transmission needs to pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. Then, the MAC layer generates a transport block, and subsequently wireless transmission is performed through the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used for providing a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be used for forwarding user data, for example, forwarding uplink data received from the application layer to the SDAP layer, or forwarding downlink data received from the SDAP layer to the application layer.

It should be understood that a quantity and types of devices in the communication system shown in FIG. 2 are merely used as an example, and this application is not limited thereto. During actual application, the communication system may further include more terminal devices and more network devices, and may further include another network element, for example, may include a core network device and/or a network element configured to implement an artificial intelligence function.

It may be understood that all or a part of functions implemented by one or more of the terminal device, the network device, the core network device, or the network element configured to implement the artificial intelligence function may be virtualized, that is, implemented through one or more of a dedicated processor or a general-purpose processor and a corresponding software module. Because the terminal device and the network device are related to an interface for air interface transmission, a transceiver function of the interface may be implemented by hardware. Core network devices such as an operation, administration, and maintenance (operation, administration, and maintenance, OAM) network element can all be virtualized. Optionally, one or more functions in the virtualized terminal device, network device, core network device, or network element configured to implement the artificial intelligence function may be implemented by a cloud device, for example, implemented by a cloud device in an over-the-top (over-the-top, OTT) system.

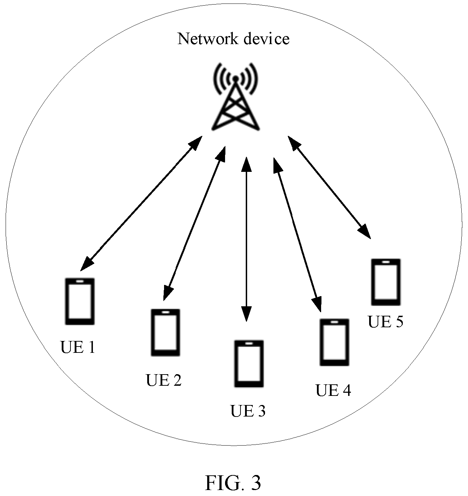

In embodiments of this application, when a central node is a network device, and a subnode is a terminal device (for example, UE), the network device and UE 1 to UE 5 may form a distributed AI training system shown in FIG. 3. In the communication system, the UE 1 to the UE 5 may send data to the network device, and the network device needs to receive uplink data sent by the UE 1 to the UE 5. The uplink data may be a representation difference or a model parameter computed by the subnode, or may be a feedback amount including state information of the subnode. In addition, the network device may send configuration information to the UE 1 to the UE 5. The configuration information may be model parameter data used by the central node to synchronize each subnode, or may be control data indicating a subnode training method. Data between the network device and UE may be carried on a physical channel, for example, a physical downlink control channel (physical downlink control channel, PDCCH), a physical downlink shared channel (physical downlink shared channel, PDSCH), a physical uplink shared channel (physical uplink shared channel, PUSCH), or a physical uplink control channel (physical uplink control channel, PUCCH), and for another example, a physical sidelink control channel (physical sidelink control channel, PSCCH) or a physical sidelink shared channel (physical sidelink shared channel, PSSCH).

To support an AI technology in a wireless network, an AI node may be further introduced into the network.

Optionally, the AI node may be deployed at one or more of the following locations in the communication system: the network device, the terminal device, the core network device, or the like. Alternatively, the AI node may be independently deployed, for example, deployed at a location other than any one of the foregoing devices, for example, a host or a cloud server in an over the top (over the top, OTT) system. The AI node may communicate with another device in the communication system. For example, the another device may be one or more of the following: a network device, a terminal device, a network element of a core network, or the like.

It can be understood that a quantity of AI nodes is not limited in this application. For example, when there are a plurality of AI nodes, the plurality of AI nodes may be divided based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application.

The AI node may be an AI network element or an AI module.

One or more AI modules are disposed in one or more devices of these network element nodes, such as a core network device, an access network node (a RAN node), a terminal, or an OAM. The access network node may serve as an independent RAN node, or may include a plurality of RAN nodes, for example, include a CU and a DU. One or more AI modules may be further disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of the neural network, a connection relationship between layers, a weight value of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain one output by inference, and the output includes one or more parameters. Learning processes, training processes, or inference processes of different models may be deployed in different nodes or devices, or may be deployed in a same node or device.

The communication system includes a RAN intelligent controller (RAN intelligent controller, RIC). For example, the RIC may be the AI module, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, delay-insensitive data. A delay of the data may be at a granularity of seconds. The near-real-time RIC mainly processes near-real-time information, for example, delay-sensitive data. A delay of the data is at a granularity of tens of milliseconds.

The near-real-time RIC is configured to perform model training and inference, for example, is configured to train an AI model and perform inference by using the AI model. The near-real-time RIC may obtain information on a network side and/or a terminal side from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from a RAN node (for example, a CU, a CU-CP, a CU-UP, a DU, and/or an RU) and/or a terminal. The information may be used as training data or inference data, and an inference result may be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

Alternatively, the near-real-time RIC and the non-real-time RIC each may be independently disposed as a network element. Optionally, the near-real-time RIC and the non-real-time RIC may alternatively serve as a part of another device. For example, the near-real-time RIC is disposed in the RAN node (for example, in the CU or the DU), and the non-real-time RIC is disposed in an OAM, a cloud server, a core network device, or another network device.

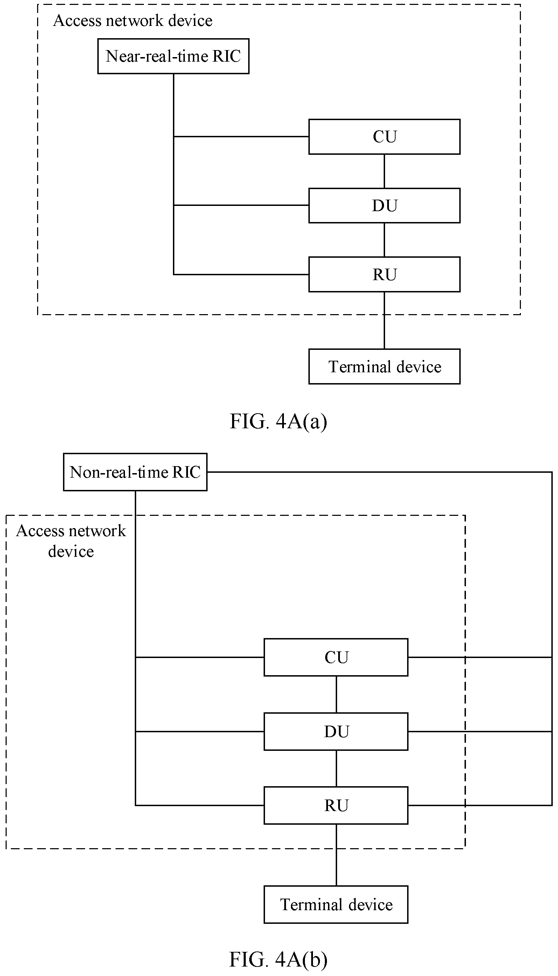

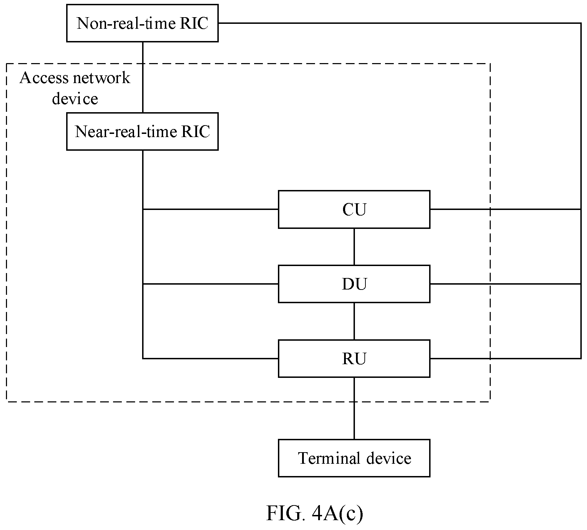

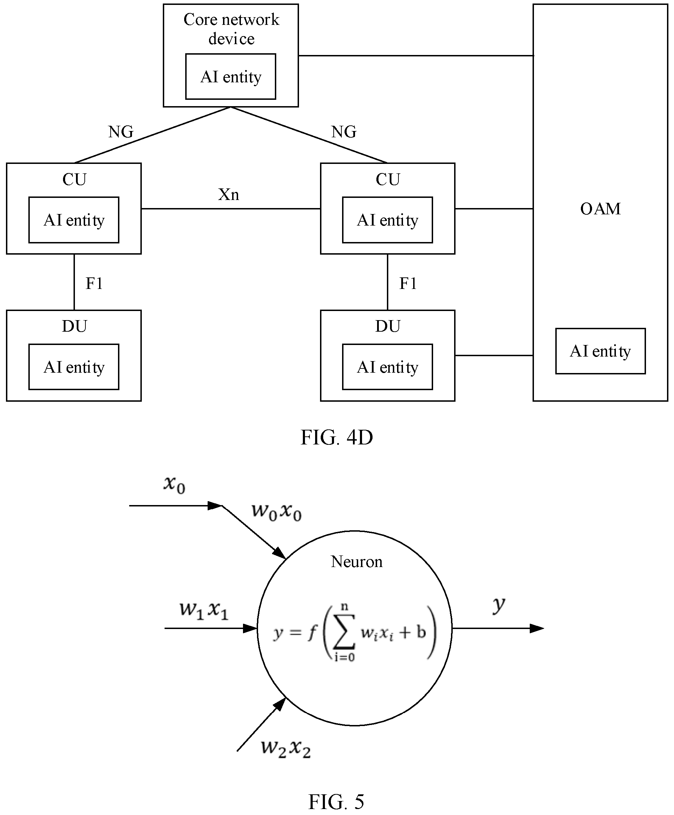

For example, disposition of the near-real-time RIC and the non-real-time RIC in a network architecture may be shown in FIG. 4A(a) to FIG. 4D.

As shown in FIG. 4A(a), in a first possible implementation, a network device includes a near-real-time RIC module, to perform model learning and/or inference.

As shown in FIG. 4A(b), in a second possible implementation, in a communication system, a non-real-time RIC may be included outside the network device. Optionally, the non-real-time RIC may be located in OAM or a core network device.

As shown in FIG. 4A(c), in a third possible implementation, the network device includes a near-real-time RIC, and a non-real-time RIC is further included outside the network device. Optionally, the non-real-time RIC may be located in OAM or a core network device.

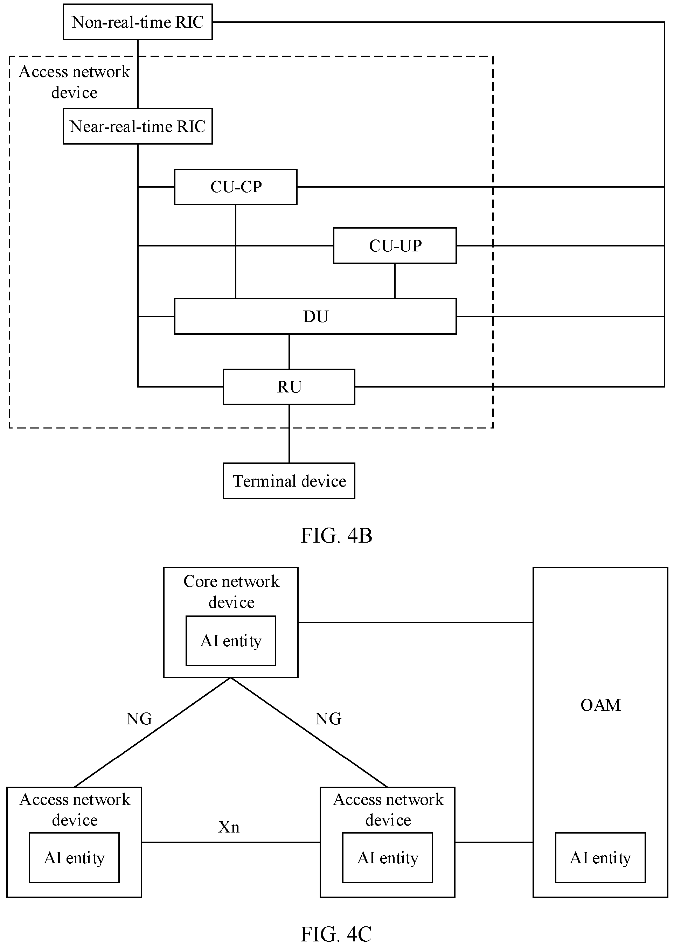

In comparison with FIG. 4A(c), in FIG. 4B, the CU is separated into a CU-CP and a CU-UP. The near-real-time RIC and the non-real-time RIC are disposed in a same way as FIG. 4A(c).

As shown in FIG. 4C, optionally, the network device includes one or more AI entities, and a function of the AI entity is similar to that of the near-real-time RIC. Optionally, the OAM includes one or more AI entities, and a function of the AI entity is similar to that of the non-real-time RIC. Optionally, the core network device includes one or more AI entities, and a function of the AI entity is similar to that of the non-real-time RIC. When the OAM and the core network device each include an AI entity, models obtained through training by the AI entities of the OAM and the core network device are different, and/or models used to perform inference are different. In this application, that the models are different includes at least one of the following: structure parameters of the models (for example, quantities of layers and/or weights of the models) are different; input parameters of the models are different; or output parameters of the models are different.

Compared with FIG. 4C, the network device in FIG. 4D is separated into a CU and a DU. Optionally, the CU may include an AI entity, and a function of the AI entity is similar to that of the near-real-time RIC. Optionally, the DU may include an AI entity, and a function of the AI entity is similar to that of the near-real-time RIC. When the CU and the DU each include an AI entity, models obtained through training by the AI entities of the CU and the DU are different, and/or models used to perform inference are different. Optionally, the CU in FIG. 4D may be further split into a CU-CP and a CU-UP. Optionally, one or more AI models may be deployed in the CU-CP, and/or one or more AI models may be deployed in the CU-UP. Optionally, in FIG. 4C or FIG. 4D, the OAM of the network device and OAM of a core network device may be separately and independently deployed.

For ease of understanding, the following first describes AI technologies in this application. It may be understood that, the descriptions are not intended to limit this application.

### (1) AI model

AI refers to intelligence exhibited by machines made by people. Usually, the artificial intelligence is a technology that presents human intelligence by using a normal computer program. The artificial intelligence may be defined as a machine or a computer that simulates humans and has cognitive functions, such as learning and problem-resolving, related to human thinking. The artificial intelligence can learn from past experience, make reasonable decisions, and respond quickly. An objective of the artificial intelligence is to understand intelligence by constructing symbolic reasoning or computer programs for reasoning.

Machine learning (machine learning, ML) is a way to implement artificial intelligence, that is, to resolve problems in the artificial intelligence by using the machine learning as a means. A machine learning theory is mainly to design and analyze some algorithms that enable a computer to automatically "learn". A machine learning algorithm is an algorithm that automatically analyzes data to obtain a rule and uses the rule to predict unknown data. Because the learning algorithm involves a large quantity of statistical theories, the machine learning is particularly closely related to inferential statistics, and is also referred to as statistical learning theory.

Machine learning may be divided into supervised learning, unsupervised learning, and reinforcement learning.

In terms of supervised learning, based on collected sample values and sample labels, a mapping relationship between the sample values and the sample labels is learned according to a machine learning algorithm, and the learned mapping relationship is expressed by using a machine learning model. A process of training a machine learning model is a process of learning the mapping relationship. For example, during signal detection, a received signal including noise is a sample, and a real constellation point corresponding to the signal is a label. Machine learning expects to learn a mapping relationship between the sample and the label by training, that is, enable a machine learning model to learn a signal detector. During training, a model parameter is optimized by calculating an error between a predicted value of a model and an actual label. Once the mapping relationship is learned, a label of each new sample can be predicted by using the learned mapping. The mapping relationship learned by supervised learning may include linear mapping and non-linear mapping. A learning task may be classified into a classification task and a regression task based on a type of a label.

In terms of unsupervised learning, an internal pattern of a sample is explored autonomously by using an algorithm based on only a collected sample value. For a specific type of algorithm of the unsupervised learning, a sample is used as a supervised signal. In other words, a model learns a mapping relationship between samples, which is referred to as self-supervised learning. During training, a model parameter is optimized by calculating an error between a predicted value of the model and the sample. Self-supervised learning may be used for signal compression and decompression restoration. Common algorithms include an autoencoder, a generative adversarial network, and the like.

Reinforcement learning is different from supervised learning, and is an algorithm that learns a policy of resolving problems by interacting with an environment. Different from supervised learning and unsupervised learning, reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. An objective of reinforcement learning is also to learn a mapping relationship between an environment status and an optimal decision action. However, a label of a "correct action" cannot be obtained in advance. Therefore, a network cannot be optimized by calculating an error between an action and the "correct action". Reinforcement learning training is implemented by iterative interaction with the environment.

The AI model is an algorithm or a computer program that can implement an AI function, and is a specific implementation of an AI technical function. The AI model represents a mapping relationship between an input and an output of the model. A type of the AI model may be a neural network, a linear regression model, a decision tree model, a support vector machine (support vector machine, SVM), a Bayesian network, a Q-learning model, or another machine learning model.

### (2) Deep neural network (deep neural network, DNN)

The deep neural network is a specific implementation form of AI technologies or machine learning technologies. According to a universal approximation theorem, the neural network can theoretically approximate any continuous function, so that the neural network has a capability of learning any mapping. A conventional communication system needs to design a communication module with rich expert knowledge. However, a DNN-based deep learning communication system can automatically discover an implicit pattern structure from a large quantity of datasets, establish a mapping relationship between data, and obtain performance better than that of a conventional modeling method.

An idea of the DNN is from a neuron structure of a brain tissue. For example, each neuron performs a weighted summation operation on input values of the neuron, and outputs an operation result through an activation function. FIG. 5 is a diagram of a neuron structure. It is assumed that inputs of a neuron are *x =* [*x*₀, *x*₁, *... , xₙ*], and weights corresponding to the inputs are respectively w = [*w*₀, *w*₁, ... , *wₙ*], where *wᵢ* is a weight of *xᵢ* and is used to weight *xᵢ*. A bias for performing weighted summation on the input values based on the weights is, for example, *b*. There may be a plurality of forms of the activation function. Assuming that an activation function of a neuron is *y = f*(*z*) = *max* (0, z), an output of the neuron is:
$y = f \left({\sum }_{i = 0}^{i = n} {w}_{i} ∗ {x}_{i} + b\right) = max \left(0, {\sum }_{i = 0}^{i = n} {w}_{i} ∗ {x}_{i} + b\right)$*.* For another example, if an activation function of a neuron is y = *f*(*z*) = z, an output of the neuron is:
$y = f \left({\sum }_{i = 0}^{i = n} {w}_{i} ∗ {x}_{i} + b\right) = {\sum }_{i = 0}^{i = n} {w}_{i} ∗ {x}_{i} + b$*,* where *b, wᵢ,* and *xᵢ* may be any possible value such as a decimal, an integer (for example, 0, a positive integer, or a negative integer), or a complex number. Activation functions of different neurons in the neural network may be the same or different.

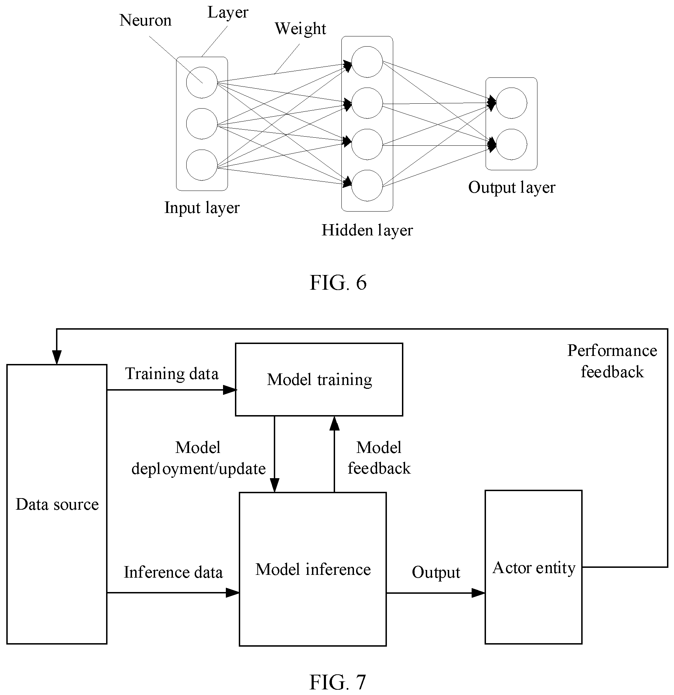

The neural network generally includes a plurality of layers, and each layer may include one or more neurons. One or both of a depth and a width of the neural network are increased, so that an expression capability of the neural network can be improved, and a more powerful information extraction and abstraction modeling capability can be provided for a complex system. The depth of the neural network may be a quantity of layers that are included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. Refer to a diagram of a neural network in FIG. 6. The input layer of the neural network performs neuron processing on received input information, and transfers a processing result to an intermediate hidden layer. The hidden layer performs computation on the received processing result to obtain a computation result, and the hidden layer transfers the computation result to the output layer or an adjacent hidden layer. Finally, the output layer obtains an output result of the neural network. One neural network may include one hidden layer, or include a plurality of hidden layers that are sequentially connected. This is not limited.

According to a network building manner, the DNN may include a feedforward neural network (feedforward neural network, FNN), a convolutional neural network (convolutional neural network, CNN), and a recurrent neural network (recurrent neural network, RNN). FIG. 6 shows an FNN, and a characteristic of the FNN is that neurons at adjacent layers are completely connected. Consequently, the FNN usually requires a large amount of storage space, resulting in high computational complexity.

The CNN is a neural network dedicated to processing data of a similar grid structure. For example, both time sequence data and image data may be considered as data of the similar grid structure. The CNN performs a convolution operation by capturing partial information through a window with a fixed size, instead of performing an operation based on all input information at one time. This greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time sequence information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

The foregoing FNN, CNN, and RNN are common neural network structures, and these network structures are constructed based on neurons. As described above, each neuron performs a weighted summation operation on input values of the neuron, and outputs a weighted summation result through a non-linear function. In this case, a weight value of the weighted summation operation of the neuron in the neural network and the non-linear function are referred to as parameters of the neural network. An example in which *max*{0, *x*} is a neuron of a non-linear function is used. Parameters of a neuron that performs an operation $max \left\{0, {\sum }_{i = 0}^{n} {w}_{i} {x}_{i} + b\right\}$are a weight *w* = [*w*₀, ... , *wₙ*], a bias *b* for weighted summation, and a non-linear function *max*{0, *x*}. Parameters of all neurons in a neural network form parameters of the neural network.

### (3) Training dataset and inference data

The training dataset is used to train an AI model. The training dataset may include an input of the AI model, or include an input and a target output of the AI model. The training dataset includes one or more pieces of training data. The training data may be a training sample that is input into the AI model, or may be a target output of the AI model. The target output may also be referred to as a label or a label sample. The training dataset is one of important parts of machine learning. In essence, model training is to learn some features from the training data, so that an output of the AI model is as close as possible to the target output. For example, a difference between the output of the AI model and the target output is minimized as much as possible. To some extent, composition and selection of the training dataset can determine performance of an AI model obtained through training.

In addition, a loss function may be defined in a training process of the AI model (for example, a neural network). The loss function describes a gap or a difference between an output value of the AI model and a target output value. A specific form of the loss function is not limited in this application. The training process of the AI model is a process in which a model parameter of the AI model is adjusted, so that a value of the loss function is less than a threshold, or the value of the loss function satisfies a target requirement. For example, the AI model is a neural network, and adjusting a model parameter of the neural network includes adjusting at least one of the following parameters: a quantity of layers of the neural network, a width of the neural network, a weight of a neuron, or a parameter in an activation function of the neuron.

The inference data may be used as an input of a trained AI model for inference of the AI model. During model inference, the inference data may be input into the AI model to obtain corresponding output, namely, an inference result.

### (4) AI model design

The AI model design mainly includes a data collection phase (for example, collection of training data and/or inference data), a model training phase, and a model inference phase, and may further include an inference result application phase. FIG. 7 shows an AI application framework. In the data collection phase, a data source (data source) is used to provide a training dataset and inference data. In the model training phase, an AI model is obtained by analysis or training by using training data (training data) provided by the data source. The AI model represents a mapping relationship between an input and an output of the model. Obtaining the AI model by learning by using a model training node is equivalent to obtaining the mapping relationship between the input and the output of the model by learning by using the training data. In the model inference phase, the AI model trained in the model training phase is used to perform inference based on the inference data provided by the data source, to obtain an inference result. This phase may also be understood as inputting the inference data into the AI model to obtain an output by using the AI model. The output is the inference result. The inference result may indicate a configuration parameter used (executed) by an execution object, and/or an operation performed by the execution object. The inference result is released in the inference result application phase. For example, the inference result may be planned by an actor (actor) entity in a unified manner. For example, the actor entity may send the inference result to one or more execution objects (for example, a core network device, a network device, or a terminal device) for execution. For another example, the actor entity may further feed back performance of the model to the data source, to facilitate subsequent update training of the model.

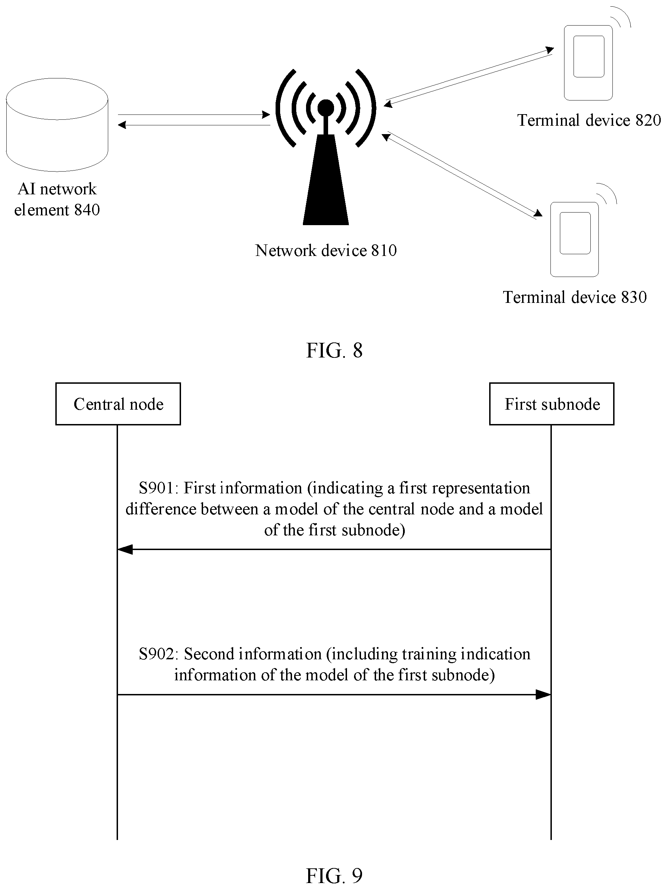

It may be understood that, a communication system may include a network element having an artificial intelligence function. The foregoing phases related to AI model design may be performed by one or more network elements having the artificial intelligence function. In a possible design, the AI function (for example, an AI module or an AI entity) may be configured in an existing network element in the communication system to implement an AI-related operation, for example, AI model training and/or inference. For example, the existing network element may be a network device (for example, a gNB), a terminal device, a core network device, a network management system, or the like. The network management system may classify network management work into three categories based on an actual requirement of network operations of an operator: operations (operation), administration (administration), and maintenance (maintenance). The network management system may also be referred to as an OAM network element, which is referred to as OAM for short. The operations are mainly routine analysis, prediction, planning, and configuration for networks and services. The maintenance is mainly routine operation activities for tests and fault management of networks and services of the networks. The network management system can detect a network running status, optimize network connections and performance, improve network running stability, and reduce network maintenance costs. Alternatively, in another possible design, an independent network element may be introduced into the communication system to perform an AI-related operation, for example, AI model training. The independent network element may be referred to as an AI network element, an AI node, or the like. This name is not limited in this application. The AI network element may be directly connected to the network device in the communication system, or may be indirectly connected to the network device via a third-party device. The third-party device may be a core network element such as an authentication management function (authentication management function, AMF) network element or a user plane function (user plane function, UPF) network element, an OAM, a cloud server, or another network element. This is not limited. For example, as shown in FIG. 8, the communication system includes a network device 810 and terminal devices 820 and 830, and an AI network element 840 is further introduced into the communication system.

In this application, one or more parameters may be obtained by inference by one model. Training processes of different models may be deployed on different devices or nodes, or may be deployed on a same device or node. Inference processes of different models may be deployed on different devices or nodes, or may be deployed on a same device or node.

The model parameter may include one or more of the following: a structure parameter of the model (for example, a quantity of layers of the model and/or a weight), an input parameter of the model (for example, an input dimension or a quantity of input ports), or an output parameter of the model (for example, an output dimension or a quantity of output ports). It may be understood that, the input dimension may be a size of a piece of input data. For example, when the input data is a sequence, an input dimension corresponding to the sequence may indicate a length of the sequence. The quantity of input ports may be an amount of input data. Similarly, the output dimension may be a size of a piece of output data. For example, when the output data is a sequence, an output dimension corresponding to the sequence may indicate a length of the sequence. The quantity of output ports may be an amount of output data.

### (5) Centralized training

In the past decade, a quantity of smart devices such as mobile phone terminals and wearable devices is increasing. It is foreseeable that in the near future, billions of internet of things devices are to be deployed on an entire communication network to achieve automation and intelligence of societal operations. Performance of a current intelligent service based on advanced machine learning may benefit from explosive growth of data on these devices and available computing capabilities of the UE. Most machine learning technologies, such as a deep neural network-based learning algorithm, need to centralize all available data for training. However, because sufficient data needs to be collected for centralized training, and the data is usually from UE, the UE needs to upload the data, and upload overheads of the data are high. In addition, massive training data is centralized on one node, and training efficiency is limited by storage space. In addition, collecting data on a UE side may infringe on user privacy. Storing massive data for centralized training may raise users' serious concerns about privacy data leakage. In addition, if a user uses only data owned by the user to train a machine learning algorithm, training effect is usually limited by a limited amount of local data.

### (6) Distributed training

Distributed training is an effective solution to the foregoing challenges. This technology allows distribution of a machine learning training process on a plurality of subnodes, clients, to achieve scalability of a learning algorithm. Distributed training allows a cloud or a server serving as a central node to collect machine learning models trained by a plurality of subnodes, and the central node improves effect of entire machine learning training by integrating models trained by the subnodes. Because training data is always kept on the subnodes, a distributed learning technology is expected to achieve same performance as the centralized training by using data and/or a computing capability of UE when privacy of user data is ensured.

To achieve this objective, a simple distributed training framework, referred to as a parameter server, is designed in a machine learning field by integrating computing and communication technologies. The parameter server mainly includes two parts: a central node and subnodes. The central node is responsible for parameter storage and/or update, and the subnode is responsible for training. Simply speaking, a basic idea of training by the parameter server is to introduce a plurality of subnodes for training at the same time. The central node is used as an intermediary for exchanging parameters between subnodes, to synchronize the model parameters of the subnodes. Each subnode first receives training data and/or a model parameter broadcast by the central node, then executes a stochastic gradient algorithm once to compute a gradient by using the received data, and uploads the gradient to the central node. The central node receives the gradients uploaded by the subnodes, aggregates the gradients to obtain a new model parameter, and broadcasts the new model parameter to the subnodes.

However, the foregoing training process faces the following two problems:
1. The subnode needs to communicate with the central node after one or more gradients are computed. Because a machine learning algorithm, for example, a deep learning algorithm, needs to perform a large quantity of gradient updates before convergence, the foregoing distributed training framework has extremely high communication overheads.
2. Data of the subnodes is distributed by the central node. That is, the central node may coordinate distribution of the training data of the subnodes, to ensure identical data distribution between the subnodes. In machine learning, independent and identical distribution of training data is very important to ensure unbiased estimation of gradients of stochastic gradient algorithms. However, in an actual scenario, the subnode may be a user terminal, and data of the user terminal cannot be accessed by the central node. That is, the central node loses a control right over data distribution of the subnodes. This results in significant differences between the subnodes and degrades overall performance.

For the foregoing problem, one method is to use a federated learning algorithm. Federated learning allows a subnode to perform multi-step gradient update by using a local dataset, and then feeds back an updated model to the central node, to reduce communication overheads caused by interaction between the subnode and the central node each time the subnode performs gradient update. Specifically, in a federated learning framework, *K* subnodes and a central server node jointly train a globally shared model, a server aggregates models sent by the subnodes, and a plurality of rounds of training is performed on models of one or more subnodes by using local private data. One round is to traverse all available local data. It is assumed that the local dataset includes *N* training samples, and *b* samples are randomly selected each time, to perform a stochastic gradient descent algorithm during training, $I = \left⌊N/b\right⌋$ gradients are computed in one round, where 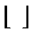 indicates rounding down. Then, the central node performs model aggregation. After aggregation is completed, the central node shares an aggregated model with the subnodes, and then repeats the foregoing steps until the model converges. Because all local models are trained based on locally stored data, data privacy of the subnodes can be protected. An entire process of this framework includes local training, communication between subnodes and central node, and model aggregation. In the local training phase, the subnodes independently train respective models in parallel. A model used by the subnode for local training may be any type of machine learning model. Currently, because a deep neural network has been proved to have a powerful capability in various fields, the local model of the subnode is usually a DNN to achieve optimal performance. In the communication phase, data transmitted in each communication between a subnode and the central node is only a model trained by the subnode or a model obtained by aggregation by the central node. To improve efficiency, some subnodes for model upload are usually selected in federated learning. The central node aggregates the received models in a specified time window. For aggregation, model averaging is usually used in federated learning. That is, the central node performs weighted averaging on the received models of the subnodes. The training, communication, and aggregation steps described above iteratively performed until the model of the central node converges.

Federated learning can protect user privacy and reduce communication overheads of a conventional parameter server technology. However, because the central node cannot access user data, federated learning has the following disadvantages:
1. When data of subnodes is not distributed independently and identically, performance cannot be ensured. In practice, data amounts of the subnodes may be unbalanced. Because different users have different preferences, data on user equipment may be non-independently and identically distributed. Distribution of a dataset of one subnode cannot represent overall data distribution. In this case, the gradient obtained by the subnode according to the stochastic gradient descent algorithm may be biased, and finally, the distributed training performance is poor.
2. When feedback links are unstable, performance fluctuates greatly. When a subnode of a user feeds back a gradient via unstable wireless transmission, a quantity of gradients of subnodes successfully received by the server is subject to randomness, causing fluctuations in model parameter updates of the central server.

All the foregoing problems cause a large difference between a model of a subnode and a model of the central node after the subnode locally performs gradient update for a plurality of times, and finally cause degradation of distributed training performance.

Another method is a Gossip learning method. A learning framework manages a set of compute subnodes, and one or more subnodes have a machine learning model and perform iteration of two steps: local gradient update and inter-node aggregation update. Specifically, one or more subnodes implement a plurality of gradient updates of a local machine learning model in the gradient update step. The subnode then shares a model parameter with another randomly selected subnode in the aggregation update step. These steps are repeated until all subnodes converge to a consensus model. Like federated learning, this technique allows subnodes to perform a plurality of steps of gradient computation before communication, and therefore does not require frequent communication. In addition, distributed learning without a fixed central node can be implemented, and therefore, the Gossip learning method has stronger scalability.

Similar to the federated learning algorithm, the Gossip learning method still faces a problem of non-independent and identical distribution of data. In addition, in a process of exchanging model parameters between nodes, a node that receives a parameter may also be considered as a central node, and a node that sends a parameter may also be considered as a compute subnode. Therefore, the Gossip learning framework also encounters feedback instability. These problems cause a large difference between models of compute nodes, and finally, it is difficult to converge to a consensus model with good performance.

It can be learned from the foregoing that, to ensure that user privacy is not infringed, distributed training requires that the central node does not access data of a subnode. In the existing federated learning technology and Gossip learning technology, a subnode is allowed to locally perform a plurality of gradient updates before communication, to alleviate a problem of frequent communication in the distributed training system. However, when these technologies face a problem of non-independent and identical distribution of data on subnodes and a problem of unstable wireless feedback, differences between the subnodes and between a subnode and the central node are large, and finally, performance of the distributed system cannot satisfy a service requirement. Therefore, performance of distributed training needs to be improved.

In view of the problems, this application provides a distributed training method. A subnode that participates in training of a model of a central node feeds back a representation difference between models to the central node, and the central node issues model training indication based on the representation difference, so that a high-performance machine learning model can be obtained within a limited quantity of communication processes between the subnode and the central node, to improve performance of distributed training.

The following describes in detail a distributed training method provided in an embodiment of this application. It may be understood that, in this application, an example in which a central node and a subnode are used as execution bodies of an interaction example is used for description. However, an execution body of the interaction example is not limited in this application. For example, the central node in the method provided in this application may alternatively be a chip, a chip system, a circuit, or a processor used in the central node, or may be a logical node, a logical module, or software that can implement all or a part of functions of the central node. The subnode in the method provided in this application may also be a chip, a chip system, a circuit, or a processor used in the subnode, or may be a logical node, a logical module, or software that can implement all or a part of functions of the subnode.

FIG. 9 is a schematic flowchart of a distributed training method according to an embodiment of this application. For example, the method may include the following steps.

S901: A first subnode sends first information to a central node. Correspondingly, the central node receives the first information.

The distributed training system shown in FIG. 1 may include one central node and a plurality of subnodes. The first subnode in this embodiment is any one of a plurality of subnodes that participate in training of a model of the central node. An interaction operation between the central node and the first subnode and an operation performed in the first subnode described in this embodiment are all applicable to another subnode.

To reduce a frequency of communication between the subnode and the central node, the subnode has a capability of locally performing multi-step gradient computation and/or model parameter update. When data is independently and identically distributed between the subnodes, gradients obtained by the subnodes by using a stochastic gradient descent (stochastic gradient descent, SGD) method are unbiased. In this case, the distributed training system can show good performance. However, in practice, because training data of the subnodes may be from users in different geographical locations, different time periods, and different preferences, an assumption of independent and identical distribution is usually not applicable to an actual system. As a result, when a subnode updates a model parameter by using local data, a model difference between subnodes and a model difference between the subnode and the central node increase continuously as training is performed, and overall performance of distributed training degrades.

When performing distributed training, the central node sends initialized model information to the subnodes that participate in model training. The subnodes train models based on local data and update the local models.

In this embodiment, each time a local model of the first subnode is updated, the first subnode may compute a first representation difference between the model of the central node and the model of the first subnode, or compute a first representation difference between models of all subnodes that participate in training of the model of the central node, and send the first information to the central node. The first information indicates the first representation difference between the model of the central node and the model of the first subnode, or the first representation difference between the models of all the subnodes. For example, the first subnode may send the first information to the central node by wireless transmission.

For example, if the first representation difference is a Euclidean norm (referred to as "L2 norm" for short) distance (referred to as "L2 distance" for short), or a cosine distance, the first information includes an L2 distance between the model of the central node and the model of the first subnode, or includes a cosine distance between the model of the central node and the model of the first subnode, or includes an L2 distance between the models of the subnodes, or includes a cosine distance between the models of the subnodes. When model training starts, the first subnode receives the initialized model information of the central node, and after a global model is updated, the first subnode receives updated model information of the central node. The first subnode may compute the L2 distance or the cosine distance between the model of the central node and the model of the first subnode based on the received model information of the central node and model information of the first subnode. In another possible implementation, the first subnode may receive model information of the subnodes, and compute an L2 distance or a cosine distance between the model of the first subnode and a model of another subnode based on received model information of the another subnode and the model information of the first subnode. The another subnode may be one or more subnodes.

The L2 distance is defined as follows:
*L*2(*wₒ*, *wₖ*) = ∥ *wₖ* - *wₒ*∥₂, where *wₒ* is a model parameter of the central node, *wₖ* is a model parameter of the first subnode, ∥·∥₂ is an L2 distance operator, and for a vector *x* = (*x*₁, x₂, ... , *xₙ*), ${\left‖x\right‖}_{1} = \sqrt{{x}_{1}^{2} + {x}_{2}^{2} + ⋯ {x}_{n}^{2}} .$.

The cosine distance is defined as follows:
$C \left({w}_{o}, {w}_{k}\right) = 1 - {w}_{k}^{T} {w}_{o} / \left({\left‖{w}_{k}\right‖}_{2}{\left‖{w}_{o}\right‖}_{2}\right)$, where *wₒ* is a model parameter of the central node, *wₖ* is a model parameter of the first subnode, and ${w}_{k}^{T}$ represents a transpose of *wₖ*.

It may be understood that the first subnode may alternatively send the received initialized model information of the central node to a third-party device, and the third-party device performs model training based on local data of the first subnode, performs model update, computes the first representation difference between the model of the central node and the model of the first subnode or computes the first representation difference between the model of the first subnode and a model of another subnode that participates in training of the model of the central node, and sends the first representation difference to the first subnode. The first subnode sends the first representation difference to the central node. The another subnode may be one or more subnodes. In a possible implementation, the another subnode includes all the subnodes that participate in training of the model of the central node.

S902: The central node sends second information to the first subnode based on the first representation difference. Correspondingly, the first subnode receives the second information.

After receiving first representation differences sent by all the subnodes that participate in training of the model of the central node, the central node performs difference value analysis, generates training indication information of the subnodes, and sends the second information to the subnodes. The second information includes training indication information of models of the subnodes.

If the first representation difference between the model of the central node and the model of the first subnode is excessively large, or the first representation difference between the model of the first subnode and the model of the another subnode is excessively large, it indicates that the model trained by the first subnode deviates far from the model of the central node, or the model trained by the first subnode deviates far from the model trained by the another subnode, and the central node delivers training indication information. The training indication information indicates the first subnode to stop training the model of the first subnode. In this way, this can promptly prevent a model difference between the first subnode and the central node (or the another subnode) from continuously increasing as training is performed, and avoid degradation of overall performance of distributed training.

Further, the central node may further allocate, based on a difference value analysis result, a corresponding parameter of a loss function to a subnode with a large difference value, so that the subnode can update a model of the subnode based on the parameter, and subsequent model update of the subnode has less impact on a training result.

If the first representation difference between the model of the central node and the model of the first subnode is small, or the first representation difference between the model of the first subnode and the model of the another subnode is small, it indicates that the model trained by the first subnode does not deviate far from the model of the central node, or the model trained by the first subnode does not deviate far from the model trained by the another subnode, and the central node delivers training indication information. The training indication information indicates the first subnode to continue training the model of the first subnode.

According to the distributed training method provided in this embodiment of this application, a subnode that participates in training of the model of the central node feeds back a representation difference between models to the central node, and the central node issues model training indication based on the representation difference, so that a high-performance machine learning model can be obtained within a limited quantity of communication processes between the subnode and the central node, to improve performance of distributed training.

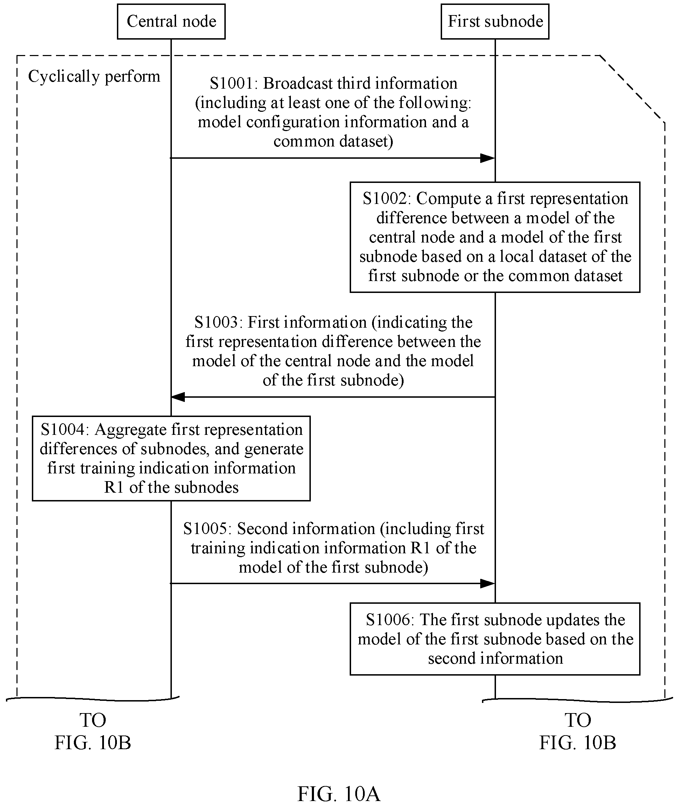

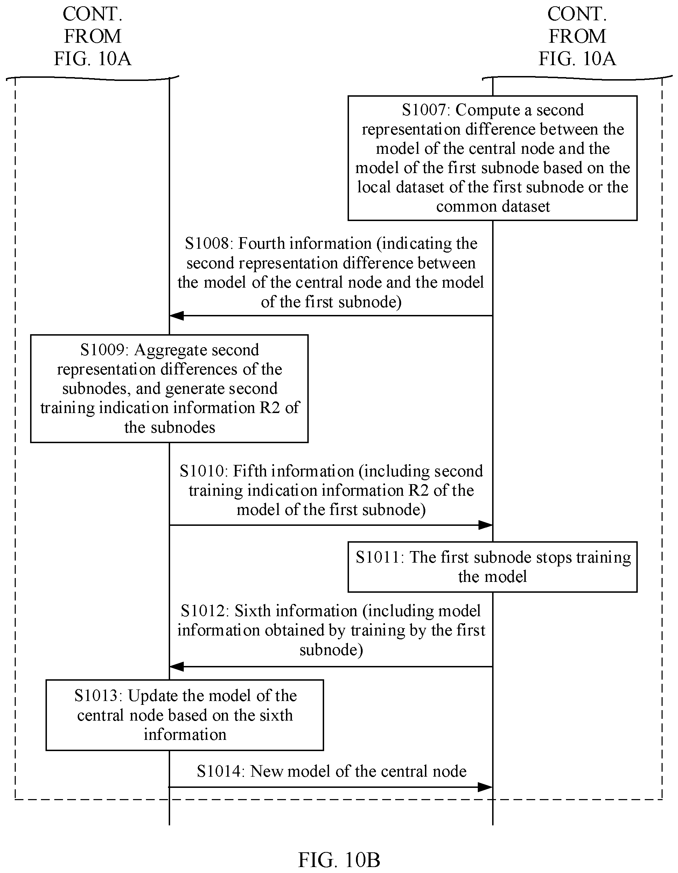

FIG. 10A and FIG. 10B are a schematic flowchart of another distributed training method according to an embodiment of this application. For example, the method may include the following steps.

S1001: A central node broadcasts third information. Correspondingly, a first subnode receives the third information.

The distributed training system shown in FIG. 1 may include one central node and a plurality of subnodes. The first subnode in this embodiment is any one of a plurality of subnodes that participate in training of a model of the central node. An interaction operation between the central node and the first subnode and an operation performed in the first subnode described in this embodiment are all applicable to another subnode.

The central node usually sends, in a broadcast manner, the same third information to all the subnodes that participate in training of the model of the central node.

The third information includes at least one of the following: model configuration information and a common dataset. During initial training, the central node usually sends, in a broadcast manner, same model configuration information and/or a same common dataset to one or more subnodes that participate in training of the model of the central node. The central node also stores the same model configuration information. Optionally, the one or more subnodes may include all the subnodes that participate in training of the model of the central node.

The model configuration information indicates at least one of the following: types of models of the plurality of subnodes, structure information of the models of the plurality of subnodes, model parameters of the models of the plurality of subnodes, or training configuration information of the models of the plurality of subnodes. Optionally, the models of the plurality of subnodes are the same, that is, the model of the central node.

For example, a type of a model of a subnode includes a DNN, a CNN, a random forest model, and the like.

For example, structure information of the model of the subnode includes a quantity of hidden layers of a DNN, and neuron data and an activation function of each layer or some layers.

For example, the delivered types and structure information of the models of the plurality of subnodes may be reflected by configuration texts, or may be code scripts for compiling a corresponding machine learning model.

The model parameter of the model of the subnode is generated by the central node according to a policy, including but not limited to random generation, pre-training generation, or obtaining from another third-party entity.

The training configuration information of the model of the subnode includes an optimizer (for example, SGD, root mean square propagation (root mean square propagation, RMSprop), and adaptive moment estimation (adaptive moment estimation, Adam)) used by the subnode to perform gradient update, a task-specific loss function (for example, a cross entropy loss function used for a classification task and a mean square error loss function used for a regression task), a regularization penalty term (such as an L2 penalty term), an initial learning rate, a batch size for gradient update, a maximum quantity of training rounds of the subnode, and the like. In addition, it is agreed that a loss function used by the subnode for local training is a task-specific loss function plus a representation difference penalty term. For example, if a task-specific loss is classification cross entropy CrossEntropy(), for a batch of training samples $D = {\left\{\left({x}_{i}, {y}_{i}\right)\right\}}_{i = 1}^{N}$ , a loss function used by a subnode *k* for local training is CrossEntropy(*D*)+*A***eₖ* (*D*), where *xᵢ* is an input of a model, *yᵢ* is a label of the model, *N* is a quantity of training samples, *i* is an *i*^{th} training sample, *A* is a representation difference coefficient, and *eₖ* is a representation difference.

S1002: The first subnode computes a first representation difference between the model of the central node and a model of the first subnode based on a local dataset of the first subnode or the common dataset.

For example, each time the local model of the first subnode is updated, the first subnode may be triggered to compute the first representation difference based on the local dataset of the first subnode or the common dataset. The local dataset may be pre-stored in each subnode before delivery. Local datasets of the subnodes are the same.

As described above, the common dataset is sent by the central node to the subnodes. The common datasets received by the subnodes are the same.

The subnodes compute first representation differences based on the same local dataset or common dataset, so that a representation difference between a model of each subnode and the model of the central node, or a representation difference between models of the subnodes can be more accurately obtained by comparison.

The first representation difference is a difference between outputs or intermediate values obtained by computation by using a same input in machine learning models of the subnodes and/or the central node. That is, the first representation difference is a difference between an output or an intermediate value of the model of the central node and an output or an intermediate value of the model of the first subnode, and/or the first representation difference is a difference between outputs or intermediate values of the models of the plurality of subnodes. The output or intermediate value is obtained based on a same input. The same input is the local datasets of the subnodes or the common dataset.

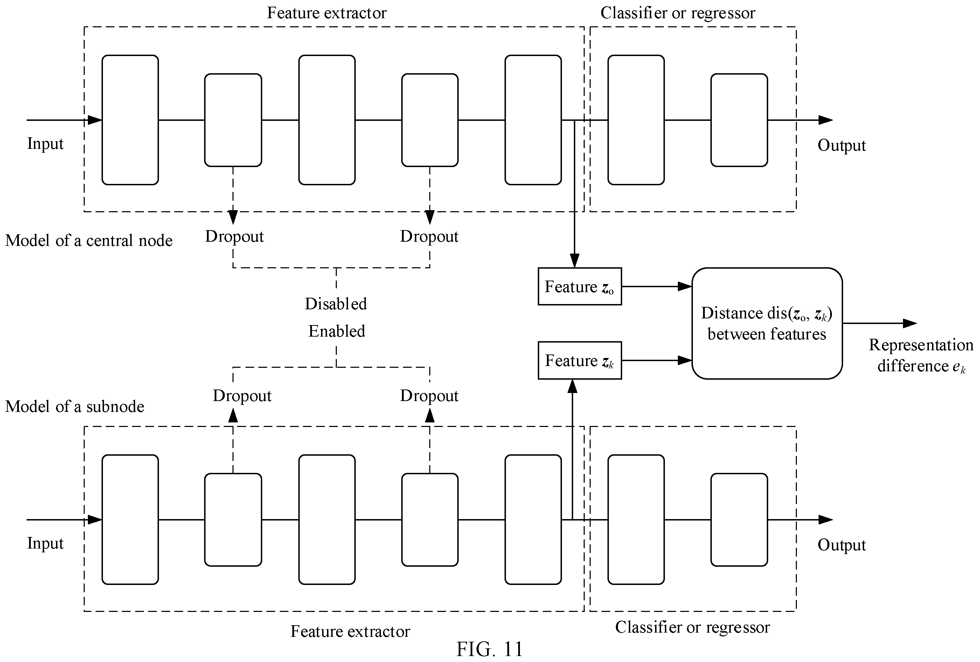

FIG. 11 is a diagram of an example of computation of a representation difference according to an embodiment of this application. The machine learning model is a neural network, and a structure includes a feature extractor, a classifier, or a regressor. For the model, computation of a representation difference follows the following steps: setting the model of the central node to an evaluation mode (disabling a stochastic module in the model, for example, disabling a dropout (Dropout) function in a DNN), randomly selecting a batch of training samples from the local dataset or the common dataset, sending the samples to the model of the central node, and obtaining a feature ***zₒ*** extracted by the model; setting a local model of the subnode to a training mode (enabling a stochastic module in the model, for example, enabling a Dropout function in a DNN), sending the samples to the model of the subnode, and obtaining a feature **zₖ** extracted by the model; and computing a measure dis(***zₒ***, ***zₖ***) (for example, an L2 distance or a cosine distance) between the feature ***zₒ*** and the feature ***zₖ***. The measure is the representation difference *eₖ*. It may be understood that, in FIG. 11, a difference between the intermediate values of the model of the central node and the model of the first subnode is used as a representation difference, and the representation difference may alternatively be a difference between the output of the model of the central node and the output of the model of the first subnode.

It may be understood that, in FIG. 11, an L2 distance or a cosine distance between an output of a last layer of a feature extractor of the central node and an output of a last layer of a feature extractor of the subnode is computed as the representation difference. In addition, an L2 distance or a cosine distance between an output of any layer of the feature extractor of the central node and an output of any layer of the feature extractor of the subnode may alternatively be computed as the representation difference. Alternatively, an L2 distance or a cosine distance between an output of any layer of a classifier or a regressor of the central node and an output of any layer of a classifier or a regressor of the subnode may be computed as the representation difference. This is not limited in this application.

Based on the process shown in FIG. 11, the representation difference between the model of the central node and the model of the subnode may be computed.

In another scenario, the model of the central node may also be replaced with a model of another subnode (a model of a reference node), and a representation difference between each subnode model and the model of the reference node may be computed.

S1003: The first subnode sends first information to the central node. Correspondingly, the central node receives the first information.

After computing the first representation difference, the first subnode sends the first information to the central node. For example, the first subnode may send the first information to the central node by wireless transmission. The first information indicates the first representation difference between the model of the central node and the model of the first subnode, or the first representation difference between the models of the subnodes.

For example, if the first representation difference is an L2 distance or a cosine distance, the first information includes an L2 distance between the model of the central node and the model of the first subnode, or includes a cosine distance between the model of the central node and the model of the first subnode, or includes an L2 distance between the models of the subnodes, or includes a cosine distance between the models of the subnodes.

S1004: The central node aggregates first representation differences of the subnodes, and generates first training indication information R1 of the subnodes.

After receiving the first representation differences sent by all the subnodes that participate in training of the model of the central node, the central node performs difference value analysis, and generates the first training indication information R1 of the subnodes.

The central node may set a first condition and a second condition, and determine whether the first representation difference of the subnodes satisfies the first condition or the second condition. If the first representation difference of the subnode satisfies the first condition, the first training indication information indicates the first subnode to continue training the model of the first subnode. If the first representation difference of the subnode satisfies the second condition, the first training indication information indicates the first subnode to stop training the model of the first subnode. For example, that the first representation difference satisfies the first condition includes: The first representation difference is less than or equal to a first threshold. The central node may compare the first representation differences of the subnodes with the first threshold. If a first representation difference of any subnode is less than or equal to the first threshold, the first training indication information indicates the subnode to continue training a model of the subnode. The central node may compare the first representation differences of the subnodes with the second threshold. If a first representation difference of any subnode is greater than or equal to the second threshold, the first training indication information indicates the subnode to stop training a model of the subnode. The central node determines, by selecting a unified condition, whether the first representation difference of each subnode satisfies the foregoing condition, so that efficiency and accuracy of difference value analysis can be improved. Optionally, the first condition, for example, the first threshold, is pre-determined by the central node, or is predefined in a protocol. The second condition, for example, the second threshold, is pre-determined by the central node, or is predefined in a protocol. For example, the second threshold may be the same as or different from the first threshold.

Further, the central node may further allocate, based on a difference value analysis result, a parameter of a corresponding training function to a subnode with a large difference value, for example, a representation difference coefficient A. It may be understood that a larger first representation difference indicates a larger representation difference coefficient. A larger first representation difference indicates that a model trained by the subnode deviates farther from the model of the central node, or a model trained by the subnode in all the subnodes that participate in training of the model of the central node deviates farther from a model trained by another subnode. Therefore, the central node allocates a representation difference coefficient A, so that the subnode can update a loss function of the subnode based on the representation difference coefficient A, and subsequent update of the model of the subnode has less impact on a training result.

S1005: The central node sends second information to the first subnode. Correspondingly, the first subnode receives the second information.

The second information may be implemented in the following several manners:
In an implementation, the second information includes the first training indication information R1 of the model of the first subnode.

According to the difference value analysis result, if the first representation difference of the first subnode satisfies the first condition, for example, the first representation difference of the first subnode is less than or equal to the first threshold, the first training indication information indicates the first subnode to continue training the model of the first subnode.

Further, the first training indication information may further indicate a representation difference coefficient in a loss function of the model of the first subnode.

According to the difference value analysis result, if the first representation difference of the first subnode satisfies the second condition, for example, the first representation difference of the first subnode is greater than or equal to the second threshold, the first training indication information indicates the first subnode to stop training the model of the first subnode.

For example, the first training indication information may include one or more bits, and one bit indicates the first subnode to continue or stop training the model of the first subnode. For example, if a value of the bit is "1", the bit indicates the first subnode to continue training the model of the first subnode; or if a value of the bit is "0", the bit indicates the first subnode to stop training the model of the first subnode; and vice versa.

If a value of the bit is "1", that is, the bit indicates the first subnode to continue training the model of the first subnode, remaining bits of the first training indication information may indicate the representation difference coefficient in the loss function of the model of the first subnode.

In another implementation, the second information includes the first training indication information R1 of the model of the first subnode, and the first training indication information indicates the first subnode to continue or stop training the model of the first subnode.

If the first representation difference of the first subnode satisfies the first condition, the second information further includes the representation difference coefficient in the loss function of the model of the first subnode.

S1006: The first subnode updates the model of the first subnode based on the second information.

After the first subnode receives the second information, if the first training indication information indicates the first subnode to continue training the model of the first subnode, and further indicates the representation difference coefficient in the loss function of the model of the first subnode, or the second information further includes the representation difference coefficient in the loss function of the model of the first subnode, the first subnode updates one or more steps of model parameters by using local data based on the second information, including updating the loss function of the model by using the representation difference coefficient.

In this step, it is assumed that the first training indication information indicates the first subnode to continue training the model of the first subnode. If the first training indication information indicates the first subnode to stop training the model of the first subnode, details are described below.

S1007: The first subnode computes a second representation difference between the model of the central node and the model of the first subnode based on the local dataset of the first subnode or the common dataset.

After updating the local model based on the second information, the first subnode may trigger computation of the second representation difference between the model of the central node and the model of the first subnode based on the local dataset of the first subnode or the common dataset. For the computational process, refer to the descriptions of step S1002. Details are not described herein again. The second representation difference computed by the first subnode may be the same as or different from the first representation difference.

S1008: The first subnode sends fourth information to the central node. Correspondingly, the central node receives the fourth information.

After obtaining the second representation difference by computation, the first subnode sends the fourth information to the central node. The fourth information indicates the second representation difference between the model of the central node and the model of the first subnode. For a specific implementation of this step, refer to the descriptions of step S1003. Details are not described herein again.

S1009: The central node aggregates second representation differences of the subnodes, and generates second training indication information R2 of the subnodes.

For a specific implementation of this step, refer to the descriptions of step S1004. Details are not described herein again. It may be understood that the second training indication information R2 of the subnodes generated by the central node may be the same as or different from the first training indication information R1 of the corresponding subnodes.

S1010: The central node sends fifth information to the first subnode. Correspondingly, the first subnode receives the fifth information.

After generating the second training indication information R2 of the subnodes, the central node sends the fifth information to the first subnode. The fifth information includes the second training indication information R2 of the model of the first subnode.

The fifth information may be implemented in the following several manners:
In an implementation, the fifth information includes the second training indication information R2 of the model of the first subnode.

According to the difference value analysis result, if the second representation difference of the first subnode is greater than or equal to the threshold, the second training indication information indicates the first subnode to stop training the model of the first subnode.

In another implementation, the fifth information includes the second training indication information R2 of the model of the first subnode, and the second training indication information indicates the first subnode to stop training the model of the first subnode.

If the second representation difference of the first subnode is less than or equal to the foregoing threshold, the fifth information further includes the representation difference coefficient in the loss function of the model of the first subnode.

S1011: The first subnode stops training the model.

If the first representation difference of the first subnode is greater than or equal to the threshold, the first training indication information indicates the first subnode to stop training the model of the first subnode. After receiving the fifth information, the first subnode stops training the model.

Alternatively, when the first subnode reaches a maximum quantity of training rounds indicated by the training configuration information, training of the model is stopped.

S1012: The first subnode sends sixth information to the central node. Correspondingly, the central node receives the sixth information.

After stopping training the model, the first subnode may send model information obtained through training to the central node. For example, the first subnode may send the sixth information to the central node. The sixth information includes the model information obtained through training by the first subnode.

S1013: The central node updates the model of the central node based on the sixth information.

After receiving the sixth information, the central node may update the model of the central node based on the sixth information.

After a subnode stops training a model, the central node receives model information obtained through training by the subnode, and may update the model of the central node based on the model information obtained through training by the subnode; or may update the model of the central node after receiving model information obtained through training by all the subnodes that participate in training the model of the central node.

A manner in which the central node updates the model includes but is not limited to weighted averaging of model parameters and the like.

It may be understood that steps S1002 to S1006 and steps S1007 to S1013 may be independently implemented, or may be jointly implemented. Steps S1002 to S1006 may also be performed for one or more times until the maximum quantity of training rounds of the first subnode is reached, or until the first subnode is indicated by the central node to stop training the model of the first subnode because the computed representation difference is greater than or equal to the threshold.

S1014: The central node delivers a new model of the central node. Correspondingly, the first node receives the new model of the central node delivered by the central node.

After all the subnodes that participate in training of the model of the central node reach a maximum quantity of training rounds, or after the central node indicates to stop training of a model of a subnode because a computed representation difference is greater than or equal to the threshold, the central node receives model information obtained through training by all the subnodes that participate in training of the model of the central node, updates the model of the central node by using the model information of these subnodes, and broadcasts new model configuration information of the central node to all the subnodes that participate in training, to start a new round of training. Steps S1001 to S1014 may be cyclically performed in the new round of training process.

Optionally, the central node is the third-party device that performs the actions related to the central node. For example, steps S1001, S1003 to S1005, S1008 to S1010, and S1012 to S1014 are all performed by the third-party device.

Optionally, the first subnode is the third-party device that performs the foregoing actions related to the first subnode. For example, steps S1001 to S1003, S1005 to S1008, S1010 to S1012, and S1014 are all performed by the third-party device.

Optionally, the central node is a network device. In this case, the network device may complete training of the model. For example, steps S1001, S1003 to S1005, S1008 to S1010, and S1012 to S1014 are all performed by the network device.

Optionally, the first subnode is a terminal device. In this case, the terminal device may complete training of the model. For example, steps S1001 to S1003, S1005 to S1008, S1010 to S1012, and S1014 are all performed by the terminal device.

Optionally, the central node includes a network device and a third-party device. In an example, one or more of steps S1004, S1009, and S1013 may be performed by the third-party device such as an OTT or a cloud server, and one or more of steps S1001, S1003, S1005, S1008, S1010, S1012, and S1014 may be performed by the network device. In addition, the network device may also communicate with the third-party device, to transmit content transmitted in one or more of steps S1001, S1003, S1005, S1008, S1010, S1012, and S1014.

Optionally, the first subnode includes a terminal device and a third-party device. In an example, one or more of steps S1002, S1006, S1007, and S1011 may alternatively be performed by the third-party device such as an OTT or a cloud server, and one or more of steps S1001, S1003, S1005, S1008, S1010, S1012, and S1014 may be performed by the terminal device. In addition, the terminal device may also communicate with the third-party device, to transmit content transmitted in one or more of steps S1001, S1003, S1005, S1008, S1010, S1012, and S1014.

According to the distributed training method provided in this embodiment of this application, a subnode that participates in training of the model of the central node feeds back a representation difference between models to the central node, and the central node issues model training indication based on the representation difference, so that a high-performance machine learning model can be obtained within a limited quantity of communication processes between the subnode and the central node, to improve performance of distributed training.

A proper physical quantity (a difference between the output or the intermediate value of the model of the central node and the output or the intermediate value of the model of the first subnode, or a difference between the outputs or the intermediate quantities of the models of the subnodes, for example, an L2 distance or a cosine distance) used to represent a difference between models of distributed nodes is selected, and training of the model of the subnode is indicated based on the representation difference, so that training of the models in the distributed training system can be better coordinated, to improve overall performance.

However, in the conventional technology, because of lack of monitoring on states of the subnodes, the difference between the subnodes and the difference between the subnode and the central node are large, and performance degrades.

In this embodiment of this application, a representation difference between models is constrained, so that dispersion of update directions of the subnodes can be effectively reduced, to reduce impact of non-independently and identically distributed data on performance of the distributed training system and a deviation caused by a packet loss, and improve final performance of the model of the central node.

In this embodiment of this application, when the representation difference is large, the central node indicates the subnode not to update the model, so that computing overheads that are not required by the subnode can be reduced, or the central node feeds back a large representation difference coefficient to the subnode, so that a representation difference in a training process of the subnode is not excessively large. Therefore, performance of the subnode during joint training with the central node can be improved. If a packet loss occurs when the subnode feeds back a model parameter, high synchronization between the models of the subnode and the central node is still maintained.

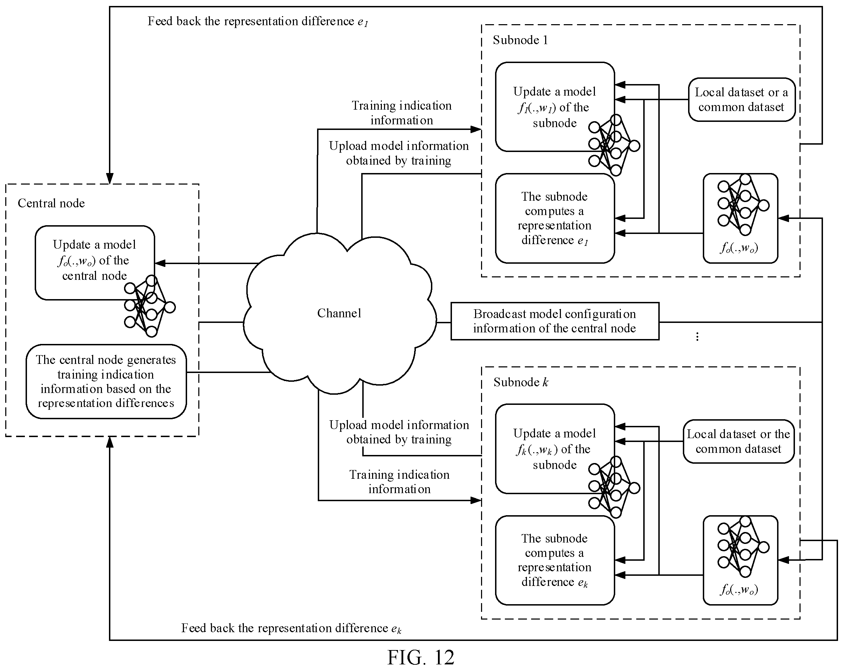

FIG. 12 is a block diagram of an example of a distributed training system according to an embodiment of this application. The distributed training system includes a central node and *K* subnodes, and *K* is a positive integer greater than or equal to 1. A model of the central node is *fₒ*(.,*wₒ*), and a model of a subnode *k* is *f*ₖ(.,*wₖ*), where *k*∈{1, 2, ..., *K*}. The central node broadcast model configuration information and a common dataset. After receiving the information broadcast by the central node, each subnode initializes a local model. Each subnode computes a representation difference *eₖ* between the model of the central node and the model of the subnode based on a local dataset of the subnode or the common dataset. Each subnode feeds back the representation difference *eₖ* to the central node. The central node aggregates representation differences of the subnodes, and generates training indication information of the subnodes. The central node sends the training indication information to each subnode. Each subnode performs local training based on the received training indication information. In a training process, each subnode computes a loss by using local data, adds a representation difference coefficient as a penalty item to a loss function, computes a gradient of a model parameter, and performs local training. If a subnode satisfies a training stop condition, training is stopped, and trained model information is fed back to the central node. The central node receives the model information from the subnode, updates a parameter *wₒ* of the central node based on the received model information, feeds back a new model to one or more subnodes, and executes the foregoing representation difference computation and reporting procedure again. For example, if a task-specific loss is classification cross entropy CrossEntropy(), for a batch of training samples $D = {\left\{\left({x}_{i}, {y}_{i}\right)\right\}}_{i = 1}^{N}$, a loss function used by the subnode *k* for local training is CrossEntropy(*D*)+*A***eₖ*(*D*), where *xᵢ* is an input of a model, *yᵢ* is a label of the model, *N* is a quantity of training samples, *i* is an *i*^{th} training sample, *A* is a representation difference coefficient, and *eₖ* is a representation difference. A larger first representation difference indicates a larger representation difference coefficient, and a loss function of the representation difference coefficient A is updated based on the representation difference coefficient *A*, so that a subsequent update of a model of a subnode has less impact on a training result.

In the foregoing procedure, the subnode may feed back the model information to the central node after completing a multi-step gradient update. This can reduce communication overheads between the subnode and the central node. In addition, the subnodes compute the representation differences based on the local datasets or common dataset, and the subnodes compute first representation differences based on the same local dataset or common dataset, so that a representation difference between a model of each subnode and the model of the central node, or a representation difference between models of the subnodes can be more accurately obtained by comparison. The central node aggregates the representation differences of the subnodes, and delivers the training indication information to the subnodes in a targeted manner, so that a representation difference between models of the subnodes and a representation difference between a model of the subnode and a model of the central node are not excessively large, to improve performance of distributed training.

In the foregoing embodiment, the subnode feeds back the representation difference to the central node, and the central node aggregates the representation differences of the subnodes, and delivers the training indication information. In the following embodiment, the subnode computes the representation difference, and determines to continue or stop model training.

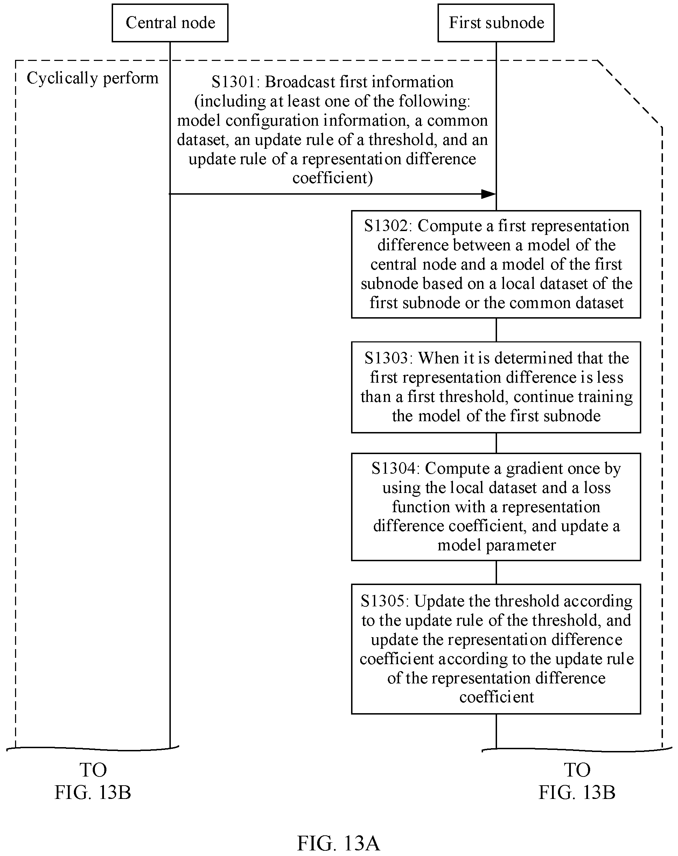

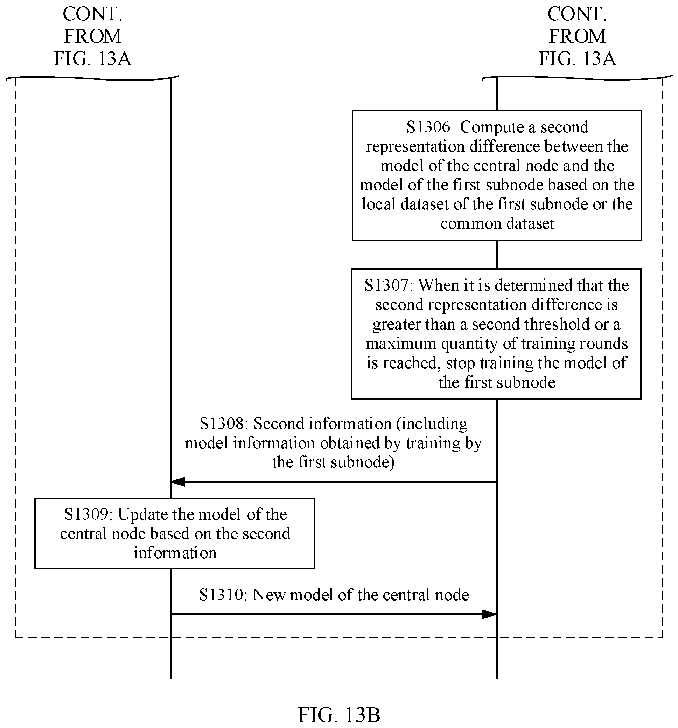

FIG. 13A and FIG. 13B are a schematic flowchart of still another distributed training method according to an embodiment of this application. For example, the method may include the following steps.

S1301: A central node broadcasts first information. Correspondingly, a first subnode receives the first information.

The first information includes at least one of the following: model configuration information, a common dataset, an update rule of a threshold, and an update rule of a representation difference coefficient.

For meanings of the model configuration information and the common dataset, refer to related descriptions in step S1001 in the embodiment shown in FIG. 10A and FIG. 10B.

The update rule of the threshold may be formulated by the central node in advance. For example, the update rule is formulated as follows: The threshold decreases with an increase in a quantity of communication rounds between the first subnode and the central node, and a threshold of the first subnode remains unchanged before the first subnode communicates with the central node. Each transmission of a new model from the central node to the first subnode is one communication. It may be understood that, as subnodes continue training and the central node aggregates models of the subnodes, models of the central node and the subnodes gradually converge. Therefore, as a quantity of communication rounds between the first subnode and the central node increases, a representation difference between a model of the central node and a model of the first subnode gradually decreases. Therefore, the update rule of the threshold may be formulated as follows: The threshold decreases with an increase in the quantity of communication rounds between the first subnode and the central node.

Optionally, the first information or the update rule of the threshold may further include an initial threshold.

The update rule of the representation difference coefficient indicates a subnode to obtain, after obtaining a representation difference by computation, an updated representation difference coefficient based on an initial representation difference coefficient and the representation difference obtained by computation. The update rule of the representation difference coefficient is formulated by the central node in advance. For example, the update rule of the representation difference coefficient is: linear or non-linear scaling of a representation difference coefficient from a previous update is used as an update amount of a representation difference coefficient relative to the previous representation difference coefficient. It may be understood that a larger representation difference indicates a larger representation difference coefficient. A larger representation difference indicates that a model trained by the subnode deviates farther from the model of the central node, or a model trained by the subnode in all subnodes that participate in training of the model of the central node deviates farther from a model trained by another subnode. Therefore, the subnode obtains an updated representation difference coefficient, so that the subnode can update a loss function of the subnode based on the representation difference coefficient, and subsequent update of the model of the subnode has less impact on a training result.

Optionally, the first information or the update rule of the representation difference coefficient may further include an initial representation difference coefficient.

S1302: The first subnode computes a first representation difference between the model of the central node and the model of the first subnode based on a local dataset of the first subnode or the common dataset.

For specific implementation of this step, refer to the related descriptions in step S1002 in the embodiment shown in FIG. 10A and FIG. 10B.

S1303: When determining that the first representation difference is less than a first threshold, the first subnode continues training the model of the first subnode.

The first threshold may be prestored in the first subnode, or sent by the central node to the first subnode in step S1301, for example, an initial threshold carried in the first information or the update rule of the threshold.

The first subnode compares the computed first representation difference with the first threshold. If the first representation difference is greater than the first threshold, the first subnode stops training the model. If the first representation difference is less than the first threshold, the first subnode continues training the model. If the first representation difference is equal to the first threshold, the first subnode continues or stops training the model.

In this step, it is assumed that if the first representation difference is less than or equal to the threshold, the first subnode continues training the model. The following describes in detail that when the first representation difference is greater than the threshold, the first subnode stops training the model.

S1304: The first subnode computes a gradient once by using the local dataset and a loss function with a representation difference coefficient, and updates a model parameter.

The first subnode updates one or more steps of model parameters by using the local dataset, where the gradient is computed by using the loss function with the representation difference coefficient. For a meaning of the representation difference coefficient, refer to the foregoing descriptions.

The representation difference coefficient may be obtained according to the update rule of the representation difference coefficient delivered by the central node in step S1301.

S1305: The first subnode updates the threshold according to the update rule of the threshold, and updates the representation difference coefficient according to the update rule of the representation difference coefficient.

The first subnode updates the first threshold according to the update rule of the threshold received in step S1301, to obtain a second threshold, and updates the representation difference coefficient according to the update rule of the representation difference coefficient received in step S1301.

This step is optional. The update rule of the threshold/the update rule of the representation difference coefficient may not specify that the threshold and/or the representation difference coefficient is updated after each local model update of the first subnode.

S1306: The first subnode computes a second representation difference between the model of the central node and the model of the first subnode based on the local dataset of the first subnode or the common dataset.

After updating the local model based on first information, the first subnode may trigger computation of the second representation difference between the model of the central node and the model of the first subnode based on the local dataset of the first subnode or the common dataset. For the computational process, refer to the descriptions of step S1302. Details are not described herein again. The second representation difference computed by the first subnode may be the same as or different from the first representation difference.

S1307: If the first subnode determines that the second representation difference is greater than the second threshold or a maximum quantity of training rounds is reached, the first subnode stops training the model of the first subnode.

Optionally, when determining that the second representation difference is equal to the second threshold, the first subnode stops training the model of the first subnode.

S1308: The first subnode sends second information to the central node. Correspondingly, the central node receives the second information.

After stopping training the model, the first subnode may send model information obtained through training to the central node. For example, the first subnode may send the second information to the central node. The second information includes the model information obtained through training by the first subnode.

S1309: The central node updates the model of the central node based on the second information.

After receiving the second information, the central node may update the model of the central node based on the second information.

After a subnode stops training a model, the central node receives model information obtained through training by the subnode, and may update the model of the central node based on the model information obtained through training by the subnode; or may update the model of the central node after receiving model information obtained through training by all the subnodes that participate in training the model of the central node.

A manner in which the central node updates the model includes but is not limited to weighted averaging of model parameters and the like.

It may be understood that steps S1302 to S1305 and steps S1306 and S1307 may be independently implemented, or may be jointly implemented. Steps S1302 to S1305 may also be performed for one or more times until the maximum quantity of training rounds of the first subnode is reached, or until training of the model of the first subnode is stopped because the computed representation difference is greater than or equal to the threshold.

S1310: The central node delivers a new model of the central node. Correspondingly, the first node receives the new model of the central node delivered by the central node.

After all the subnodes that participate in training of the model of the central node reach the maximum quantity of training rounds, or after training of a model of a subnode is stopped because a computed representation difference is greater than or equal to the threshold, the central node receives model information obtained through training by all the subnodes that participate in training of the model of the central node, updates the model of the central node by using the model information of these subnodes, and broadcasts new model configuration information of the central node to the subnodes, to start a new round of training. Steps S1301 to S1309 may be cyclically performed in the new round of training process.

Optionally, the central node is the third-party device that performs the actions related to the central node. For example, steps S1301, and S1308 to S1310 are all performed by the third-party device.

Optionally, the first subnode is the third-party device that performs the actions related to the first subnode. For example, steps S1301 to S1308, and S1310 are all performed by the third-party device.

Optionally, the central node is a network device. For example, steps S1301, and S1308 to S1310 are all performed by the network device.

Optionally, the first subnode is a terminal device. For example, steps S1301 to S1308, and S1310 are all performed by the terminal device.

Optionally, the central node includes a network device and a third-party device. In an example, step S1309 may be performed by the third-party device such as an OTT or a cloud server, and one or more of steps S1301, S1308, and S1310 may be performed by the network device. In addition, the network device may also communicate with the third-party device, to transmit content transmitted in one or more of steps S1301, S1308, and S1310.

Optionally, the first subnode includes a terminal device and a third-party device. In an example, one or more of steps S1302 to S1307 may alternatively be performed by the third-party device such as an OTT or a cloud server, and one or more of steps S1301, S1308, and S1310 may be performed by the terminal device. In addition, the terminal device may also communicate with the third-party device, to transmit content transmitted in one or more of steps S1301, S1308, and S1310.

According to the distributed training method provided in this embodiment of this application, the central node delivers the model configuration information, the common dataset, the update rule of the threshold, and the update rule of the representation difference coefficient to a subnode. The subnode may compute a representation difference between the model of the central node and a model of the subnode, compare the representation difference with the threshold, and determine whether to continue or stop training the model. If training of the model continues, the loss function with the representation difference coefficient is used to update a model parameter. A representation difference between models is constrained, so that dispersion of update directions of the subnodes can be effectively reduced, to reduce impact of non-independently and identically distributed data on performance of a distributed training system and a deviation caused by a packet loss, improve final performance of the model of the central node, and improve performance of distributed training.

In this application, "sending information to... (for example, a subnode)" or a related illustration in the accompanying drawings may be understood as: a destination end of the information is the subnode, and may include directly or indirectly sending information to the subnode. "Receiving information from... (for example, a subnode)" or "receiving information that is from... (for example, a subnode)" or a related illustration in the accompanying drawings may be understood as: a source end of the information is the subnode, and may include directly or indirectly receiving information from the subnode. Information may undergo necessary processing, for example, a format change, between the source end for sending the information and the destination end. However, the destination end may understand valid information from the source end. Similar descriptions in this application may be construed in a similar manner, and details are not described herein again.

The foregoing mainly describes the solutions provided in embodiments of this application from a perspective of interaction between nodes. Correspondingly, an embodiment of this application further provides a distributed training apparatus. The distributed training apparatus is configured to implement the foregoing methods. The distributed training apparatus may be the central node in the foregoing method embodiments, or may be a component that can be used in the central node; or the distributed training apparatus may be a subnode in the foregoing method embodiments, or may be a component that can be used in the subnode. It may be understood that, to implement the foregoing functions, a distributed training apparatus includes a corresponding hardware structure and/or a corresponding software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the distributed training apparatus may be divided into functional modules based on the foregoing method embodiment. For example, each functional module may be obtained by division based on each corresponding function, or two or more functions may be integrated into one processing unit. The integrated module may be implemented in a form of hardware, or may be implemented in a form of a software functional module. It should be noted that, in embodiments of this application, division into the modules is an example, and is merely a logical function division. In actual implementation, another division manner may be used.

Based on a same concept of the foregoing distributed training method, this application further provides the following distributed training apparatus:

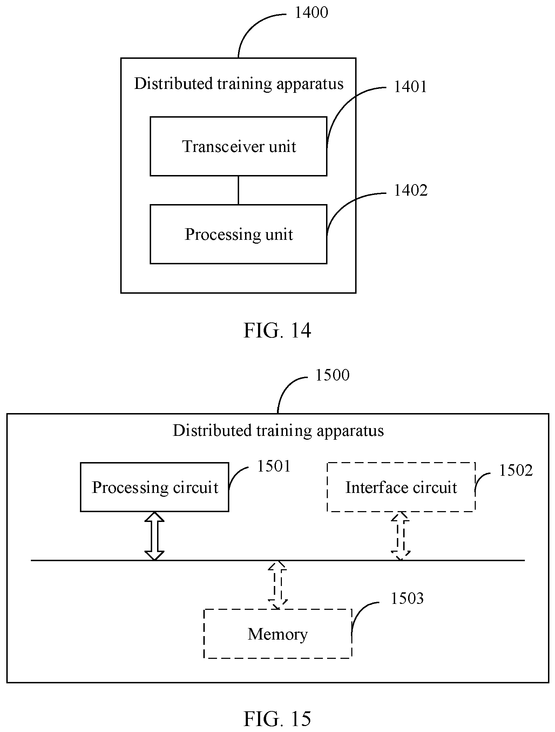

FIG. 14 is a diagram of a structure of a distributed training apparatus according to an embodiment of this application. The distributed training apparatus 1400 includes a transceiver unit 1401 and a processing unit 1402.

When the distributed training apparatus is configured to implement a function of the first subnode in the foregoing method embodiments, the transceiver unit 1401 is configured to perform one or more of the operations of the first subnode in steps S1001, S1003, S1005, S1008, S1010, S1012, and S1014 in the embodiment shown in FIG. 10A and FIG. 10B, and the processing unit 1402 is configured to perform one or more of steps S1002, S1006, S1007, and S1011 in the embodiment shown in FIG. 10A and FIG. 10B. Alternatively, the transceiver unit 1401 is configured to perform one or more of the operations of the first subnode in steps S1301, S1308, and S1310 in the embodiment shown in FIG. 13A and FIG. 13B, and the processing unit 1402 is configured to perform one or more of steps S1302 to S1307 in the embodiment shown in FIG. 13A and FIG. 13B. Optionally, the distributed training apparatus may be a terminal device, or a third-party device such as an OTT or a cloud server, or may be a system including a terminal device and a third-party device.

When the distributed training apparatus is configured to implement a function of the central node in the foregoing method embodiments, the transceiver unit 1401 is configured to perform one or more of the operations of the central node in steps S1001, S1003, S1005, S1008, S1010, S1012, and S1014 in the embodiment shown in FIG. 10A and FIG. 10B, and the processing unit 1402 is configured to perform one or more of steps S1004, S1009, and S1013 in the embodiment shown in FIG. 10A and FIG. 10B. Alternatively, the transceiver unit 1401 is configured to perform one or more of the operations of the central node in steps S1301, S1308, and S1310 in the embodiment shown in FIG. 13A and FIG. 13B, and the processing unit 1402 is configured to perform step S1309 in the embodiment shown in FIG. 13A and FIG. 13B. Optionally, the distributed training apparatus may be a network device, or a third-party device such as an OTT or a cloud server, or may be a system including a network device and a third-party device.

For specific implementations of the transceiver unit 1401 and the processing unit 1402, refer to the descriptions in the foregoing method embodiments. In addition, it should be noted that the transceiver unit and/or the processing unit may be implemented via a virtual module. For example, the processing unit may be implemented via a software functional unit or a virtual apparatus, and the transceiver unit may be implemented via a software function or a virtual apparatus. Alternatively, the processing unit or the transceiver unit may be implemented by using a physical circuit. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation); and the processing unit is a processing circuit, for example, an integrated processor, a microprocessor, or an integrated circuit.

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

FIG. 15 is a diagram of a structure of another distributed training apparatus according to an embodiment of this application. The distributed training apparatus 1500 includes one or more processing circuits 1501 (one processing circuit is shown in the figure). Optionally, the distributed training apparatus 1500 may further include a memory 1503 (represented by a dashed line in the figure). The memory 1503 is configured to store instructions executed by the processing circuit 1501, or store input data required by the processing circuit 1501 to run the instructions, or store data generated after the processing circuit 1501 runs the instructions. Optionally, the distributed training apparatus 1500 may further include an interface circuit 1502 (represented by a dashed line in the figure), and the processing circuit 1501 and the interface circuit 1502 are coupled to each other. It may be understood that the interface circuit 1502 may be a transceiver or an input/output interface.

The processing circuit may be a processor or a circuit used for processing in the processor.

When the distributed training apparatus is configured to implement a function of the first subnode in the foregoing method embodiments, the interface circuit 1502 is configured to perform one or more of the operations of the first subnode in steps S1001, S1003, S1005, S1008, S1010, S1012, and S1014 in the embodiment shown in FIG. 10A and FIG. 10B, and the processing circuit 1501 is configured to perform one or more of steps S1002, S1006, S1007, and S1011 in the embodiment shown in FIG. 10A and FIG. 10B. Alternatively, the interface circuit 1502 is configured to perform one or more of the operations of the first subnode in steps S1301, S1308, and S1310 in the embodiment shown in FIG. 13A and FIG. 13B, and the processing circuit 1501 is configured to perform one or more of steps S1302 to S1307 in the embodiment shown in FIG. 13A and FIG. 13B. Optionally, the distributed training apparatus may be a terminal device, or a third-party device such as an OTT or a cloud server, or may be a system including a terminal device and a third-party device.

When the distributed training apparatus is configured to implement a function of the central node in the foregoing method embodiments, the interface circuit 1502 is configured to perform one or more of the operations of the central node in steps S1001, S1003, S1005, S1008, S1010, S1012, and S1014 in the embodiment shown in FIG. 10A and FIG. 10B, and the processing circuit 1501 is configured to perform one or more of steps S1004, S1009, and S1013 in the embodiment shown in FIG. 10A and FIG. 10B. Alternatively, the interface circuit 1502 is configured to perform one or more of the operations of the central node in steps S1301, S1308, and S1310 in the embodiment shown in FIG. 13A and FIG. 13B, and the processing circuit 1501 is configured to perform step S1309 in the embodiment shown in FIG. 13A and FIG. 13B. Optionally, the distributed training apparatus may be a network device, or a third-party device such as an OTT or a cloud server, or may be a system including a network device and a third-party device.

When the distributed training apparatus is a chip used in a central node, the chip implements functions of the central node in the foregoing method embodiments. The chip receives information from another module in the central node, and the information is sent by a subnode to the central node; or the chip sends information to another module in the central node, and the information is sent by the central node to a subnode. When the central node is a network device, a module of the central node herein may be a baseband chip of the central node, or may be a CU, a DU, or another module, or may be an apparatus in an open radio access network (open radio access network, O-RAN) architecture, for example, an apparatus such as an open CU or an open DU. When the central node is a third-party device, a module of the subnode herein may be a processing chip of the third-party device. The processing chip may be configured to implement AI training.

When the distributed training apparatus is a chip used in a subnode, the chip implements functions of the subnode in the foregoing method embodiments. The chip receives information from another module in the subnode, and the information is sent by a central node to the subnode; or the chip sends information to another module in the subnode, and the information is sent by the subnode to the central node. When the subnode is a terminal device, a module of the subnode herein may be a baseband chip of the subnode, or a baseband chip and a processing chip. The processing chip may be configured to implement AI training. When the subnode is a third-party device, a module of the subnode herein may be a processing chip of the third-party device. The processing chip may be configured to implement AI training.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is caused to perform the method in the foregoing embodiments.

An embodiment of this application further provides a distributed training system, including the foregoing distributed training apparatus.

An embodiment of this application further provides a circuit. The circuit is coupled to a memory, and the circuit is configured to perform the method shown in the foregoing embodiments. The circuit may include a chip circuit.

Optionally, an embodiment of this application further provides a chip system, including at least one processor and an interface. The at least one processor is coupled to a memory through the interface. When the at least one processor runs a computer program or instructions in the memory, the chip system is caused to perform the method in any one of the foregoing method embodiments. Optionally, the chip system may include a chip, or may include a chip and another discrete device. This is not specifically limited in this embodiment of this application.

Alternatively, the memory in this application may be a circuit or any other apparatus that can implement a storage function, and is configured to store program instructions and/or data. The memory is any other medium that can carry or store expected program code in a form of an instruction or a data structure and that can be accessed by a computer, but is not limited thereto. For example, the memory may be a non-volatile memory, for example, a digital versatile disc (digital versatile disc, DVD), a hard disk drive (hard disk drive, HDD), or a solid-state drive (solid-state drive, SSD), or may be a volatile memory (volatile memory), for example, a random access memory (random access memory, RAM).

The terms "including", "having", and any variations thereof mentioned in the following descriptions of this application are intended to cover a non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprise" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the description of each embodiment has respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

## Claims

1. A distributed training method, wherein the method comprises:
receiving first information from a first subnode, wherein the first information indicates a first representation difference between a model of a central node and a model of the first subnode, and the first subnode is any one of a plurality of subnodes that participate in training of the model of the central node; and
sending second information to the first subnode, wherein the second information is obtained based on the first representation difference, and the second information comprises training indication information of the model of the first subnode.

2. The method according to claim 1, wherein the first representation difference satisfies a first condition, and the training indication information indicates the first subnode to continue training the model of the first subnode.

3. The method according to claim 2, wherein the training indication information further indicates a representation difference coefficient in a loss function of the model of the first subnode.

4. The method according to claim 2, wherein the second information further comprises a representation difference coefficient in a loss function of the model of the first subnode.

5. The method according to claim 3 or 4, wherein a larger first representation difference indicates a larger representation difference coefficient.

6. The method according to claim 1, wherein the first representation difference satisfies a second condition, and the training indication information indicates the first subnode to stop training the model of the first subnode.

7. The method according to any one of claims 1 to 6, wherein the first representation difference is obtained based on a local dataset of the first subnode or a common dataset.

8. The method according to any one of claims 1 to 7, wherein the first representation difference is a difference between an output or an intermediate value of the model of the central node and an output or an intermediate value of the model of the first subnode, and/or the first representation difference is a difference between outputs or intermediate values of models of the plurality of subnodes, wherein the output or the intermediate value is obtained based on a same input.

9. The method according to any one of claims 1 to 8, wherein the method further comprises:
broadcasting third information, wherein the third information comprises at least one of the following: model configuration information and the common dataset, and the model configuration information indicates at least one of the following: types of the models of the plurality of subnodes, structure information of the models of the plurality of subnodes, model parameters of the models of the plurality of subnodes, or training configuration information of the models of the plurality of subnodes.

10. A distributed training method, wherein the method comprises:
sending first information to a central node, wherein the first information indicates a first representation difference between a model of the central node and a model of a first subnode, and the first subnode is any one of a plurality of subnodes that participate in training of the model of the central node; and
receiving second information from the central node, wherein the second information is obtained based on the first representation difference, and the second information comprises training indication information of the model of the first subnode.

11. The method according to claim 10, wherein the first representation difference satisfies a first condition, and the training indication information indicates the first subnode to continue training the model of the first subnode.

12. The method according to claim 11, wherein the method further comprises:
updating the model of the first subnode based on the second information.

13. The method according to claim 11 or 12, wherein the training indication information further indicates a representation difference coefficient in a loss function of the model of the first subnode.

14. The method according to claim 11 or 12, wherein the second information further comprises a representation difference coefficient in a loss function of the model of the first subnode.

15. The method according to claim 13 or 14, wherein a larger first representation difference indicates a larger representation difference coefficient.

16. The method according to claim 10, wherein the first representation difference satisfies a second condition, and the training indication information indicates the first subnode to stop training the model of the first subnode.

17. The method according to any one of claims 10 to 16, wherein the first representation difference is obtained based on a local dataset of the first subnode or a common dataset.

18. The method according to any one of claims 10 to 17, wherein the first representation difference is a difference between an output or an intermediate value of the model of the central node and an output or an intermediate value of the model of the first subnode, and/or the first representation difference is a difference between outputs or intermediate values of models of the plurality of subnodes, wherein the output or the intermediate value is obtained based on a same input.

19. The method according to any one of claims 10 to 18, wherein the method further comprises:
receiving third information, wherein the third information comprises at least one of the following: model configuration information and the common dataset, and the model configuration information indicates at least one of the following: types of the models of the plurality of subnodes, structure information of the models of the plurality of subnodes, model parameters of the models of the plurality of subnodes, or training configuration information of the models of the plurality of subnodes.

20. A distributed training method, wherein the method comprises:
sending first information, wherein the first information comprises at least one of the following: model configuration information, a common dataset, an update rule of a threshold, and an update rule of a representation difference coefficient, the threshold is used for comparison of a representation difference between a model of a central node and a model of a first subnode, and the representation difference coefficient is a parameter in a loss function of the model of the first subnode; and
receiving second information, wherein the second information comprises model information obtained through training by the first subnode.

21. The method according to claim 20, wherein the model configuration information indicates at least one of the following: types of models of a plurality of subnodes that participate in training of the model of the central node, structure information of the models of the plurality of subnodes, model parameters of the models of the plurality of subnodes, or training configuration information of the models of the plurality of subnodes.

22. The method according to claim 20 or 21, wherein the update rule of the threshold is that the threshold decreases with an increase in a quantity of communication rounds between the first subnode and the central node.

23. The method according to any one of claims 20 to 22, wherein the update rule of the representation difference coefficient is: linear or non-linear scaling of a representation difference coefficient from a previous update is used as an update amount of a representation difference coefficient relative to the previous representation difference coefficient.

24. The method according to any one of claims 20 to 23, wherein a larger representation difference indicates a larger representation difference coefficient.

25. A distributed training method, wherein the method comprises:
computing a first representation difference between a model of a central node and a model of a first subnode based on a local dataset of the first subnode or a common dataset;
when the first representation difference is less than or equal to a first threshold, continuing training of the model of the first subnode; and
updating the model of the first subnode by using the local dataset and a loss function with a representation difference coefficient, wherein a larger first representation difference indicates a larger representation difference coefficient.

26. The method according to claim 25, wherein the method further comprises:
receiving first information, wherein the first information comprises at least one of the following: model configuration information, the common dataset, an update rule of a threshold, and an update rule of the representation difference coefficient.

27. The method according to claim 25 or 26, wherein the method further comprises:
updating the first threshold according to the update rule of the threshold, to obtain a second threshold.

28. The method according to any one of claims 25 to 27, wherein the method further comprises:
updating the representation difference coefficient according to the update rule of the representation difference coefficient.

29. The method according to any one of claims 25 to 28, wherein the method further comprises:
when the first representation difference is greater than the first threshold, stopping training the model of the first subnode.

30. The method according to any one of claims 25 to 29, wherein the model configuration information indicates at least one of the following: types of models of a plurality of subnodes that participate in training of the model of the central node, structure information of the models of the plurality of subnodes, model parameters of the models of the plurality of subnodes, or training configuration information of the models of the plurality of subnodes.

31. The method according to any one of claims 25 to 30, wherein the update rule of the threshold is that the threshold decreases with an increase in a quantity of communication rounds between the first subnode and the central node.

32. The method according to any one of claims 25 to 31, wherein the update rule of the representation difference coefficient is: linear or non-linear scaling of a representation difference coefficient from a previous update is used as an update amount of a representation difference coefficient relative to the previous representation difference coefficient.

33. The method according to any one of claims 25 to 32, wherein a larger representation difference indicates a larger representation difference coefficient.

34. A distributed training apparatus, comprising a module configured to perform the method according to any one of claims 1 to 9, or comprising a module configured to perform the method according to any one of claims 10 to 19, or comprising a module configured to perform the method according to any one of claims 20 to 24, or comprising a module configured to perform the method according to any one of claims 25 to 33.

35. A computer-readable storage medium, wherein the computer-readable storage medium stores a computer program or instructions, and when the computer program or the instructions are executed, the method according to any one of claims 1 to 9, or the method according to any one of claims 10 to 19, or the method according to any one of claims 20 to 24, or the method according to any one of claims 25 to 33 is implemented.

36. A computer program product, wherein the computer program product comprises related program instructions, and when the related program instructions are executed, the method according to any one of claims 1 to 9, or the method according to any one of claims 10 to 19, or the method according to any one of claims 20 to 24, or the method according to any one of claims 25 to 33 is implemented.
